# EUROPÄISCHE PATENTANMELDUNG

(11) **EP 4 635 654 A1**
(43) Veröffentlichungstag der Anmeldung: **22.10.2025**
(21) Anmeldenummer: 24170694.4
(22) Anmeldetag: 17.04.2024
(51) Int. Cl.: B23B 27/16, B23B 5/12

(54) **SCHÄLPLATTE UND VERFAHREN ZUM SCHÄLDREHEN**

(71) Anmelder: CERATIZIT Austria Gesellschaft m.b.H., 6600 Reutte (AT)
(72) Erfinder: FRIEDL, Roland, 6600 Reutte (AT)
(74) Vertreter: Ciesla, Dirk

(57) **Zusammenfassung**

Verfahren zum Schäldrehen eines Werkstücks (W), wobei in einer Werkzeugaufnahme (6) wenigstens zwei gleichförmige Schneidplatten (1, 1') angeordnet sind, an welchen jeweils eine Mehrzahl von Schruppschneidenabschnitten (2) und jeweils eine Mehrzahl von davon verschiedenen Schlichtschneidenabschnitten (3) ausgebildet ist, wobei in einer Einbaulage die bezüglich einer Bearbeitungsrichtung voranstehende, für eine Schruppbearbeitung vorgesehene Schneidplatte (1) derart angestellt wird, dass sie nur mit einem Schruppschneidenabschnitt (2) im Eingriff steht und die nachstehende, für eine Schlichtbearbeitung vorgesehene Schneidplatte (1') derart angestellt wird, dass sie nur mit einem Schlichtschneidenabschnitt (3) im Eingriff steht.

## Beschreibung

Die vorliegende Erfindung betrifft ein Verfahren zum Schäldrehen mit den Merkmalen des Oberbegriffs von Anspruch 1, eine Anordnung zum Schäldrehen sowie eine Schneidplatte zum Schäldrehen.

Die Erfindung betrifft ferner eine Kassette zur Aufnahme von Schneidplatten sowie eine Verwendung von Schneidplatten zum Schäldrehen.

Schäldrehen (engl. *bar peeling*) ist ein spanabhebendes Bearbeitungsverfahren zum Abtragen äußerer Materialschichten von gewalzten oder geschmiedeten Rohlingen mit rundem Querschnitt. Beim Schäldrehen wird das Werkstück - in der Regel eine Stange oder ein dickwandiges Rohr - von Walzen zentriert durch ein rotierendes Werkzeug, den Schälkopf, geführt.

Ein Schälkopf in der Regel mehrere Werkzeugaufnahmen oder -schlitten mit typischerweise jeweils ein bis drei Schneideinsätzen auf.

Die Werkzeugaufnahmen - oder schlitten können mit oder ohne sogenannte Kassetten ausgebildet sein.

In einer Kassette sind Aufnahmen für Schneideinsätze ausgebildet. Durch ein Wechseln von Kassetten an einer Anlage zum Schäldrehen können Schneideinsätze besonders rasch getauscht werden.

Die beim Schäldrehen verwendeten Schneideinsätze werden auch als Schneidplatten oder Schälplatten bezeichnet.

Die Schneidplatten werden beim Schäldrehen üblicherweise so angeordnet, dass eingangsseitig sogenannte Schruppplatten (auch als Vorschneider bezeichnet) den groben Materialabtrag, das Schruppen, übernehmen und ausgangsseitig sogenannte Schlichtplatten (auch als Fertigschneider oder Nachschneider bezeichnet) für hohe Oberflächengüte, Formgenauigkeit und Maßgenauigkeit sorgen. Als eingangsseitig wird eine Schneidplatte oder ein Abschnitt einer Schneidkante bezeichnet, der zuerst in einen Eingriff tritt. Die Schlichtplatten sind in Bezug auf eine Vorschubrichtung nach den Schruppplatten angeordnet.

In der Regel sind in einer Werkzeugaufnahme also gesonderte Schälplatten vorgesehen, welche die Aufgaben des Schruppens und des Schlichtens getrennt übernehmen.

Dazu hat sich eine sogenannte Tandem-Anordnung bewährt, gemäß welcher in einer Kassette eine Schrupp- und eine Schlichtplatte angeordnet sind.

Für das Schruppen werden häufig Rundplatten verwendet.

Für das Schlichten werden häufig gestreckt-polygonal geformte Schneidplatten verwendet, insbesondere gestreckt-acht-eckige Schneidplatten. Diese weisen kurze Hauptschneiden für geringe Schnitttiefen und sehr lange Nebenschneiden für das Glätten auf.

Darüber hinaus sind Schneidplatten bekannt, die sowohl Hauptschneiden für das Schruppen als auch Nebenschneiden für das Schlichten aufweisen. Die Hauptschneide übernimmt dabei den groben Materialabtrag, das Schruppen; die Nebenschneide führt das Schlichten aus, sorgt also für hohe Oberflächengüte, Formgenauigkeit und Maßgenauigkeit. So ist zum Beispiel aus der AT501655 A1 eine polygonale Schneidplatte mit einer Hauptschneide zum Schruppen und damit verbunden einer Nebenschneide ("Glättschneide") zum Schlichten bekannt.

Die EP3419779 B1 zeigt ebenfalls eine Schneidplatte für ein gleichzeitiges Schruppen und Schlichten.

Die WO2021161301 A1 zeigt eine quadratische Schneidplatte zum Schäldrehen mit einer mittig an einer Seitenkante ausgebildeten geraden Schlichtschneide, die beidseitig von Schruppschneidenabschnitten ("*peeling sub-edges*") begrenzt ist.

Nachteilig an bekannten Verfahren zum Schäldrehen und den bekannten Schneidplatten zum Schäldrehen ist, dass ein großer Teil der Schneidplatte (etwa bezogen auf einen Umfang) ungenutzt bleibt.

Die Aufgabe der vorliegenden Erfindung ist es, ein Verfahren zum Schäldrehen anzugeben, das die Nachteile überwindet. Ferner soll eine Anordnung zum Schäldrehen sowie eine Schneidplatte angegeben werden.

Die Aufgabe wird gelöst durch ein Verfahren mit den Merkmalen von Anspruch 1.

Indem beim erfindungsgemäßen Verfahren zum Schäldrehen eines Werkstücks in einer Werkzeugaufnahme wenigstens zwei gleiche Schneidplatten angeordnet sind, an welchen jeweils eine Mehrzahl von Schruppschneidenabschnitten und jeweils eine Mehrzahl von davon verschiedenen Schlichtschneidenabschnitten ausgebildet ist, wobei in einer Einbaulage die bezüglich einer Bearbeitungsrichtung voranstehende, für eine Schruppbearbeitung vorgesehene Schneidplatte derart angestellt wird, dass die voranstehende Schneidplatte nur mit einem Schruppschneidenabschnitt im Eingriff steht und die nachstehende, für eine Schlichtbearbeitung vorgesehene Schneidplatte derart angestellt wird, dass sie nur mit einem Schlichtschneidenabschnitt im Eingriff steht,
wird eine bessere Materialausnutzung der Schneidplatten erzielt. Es wird ein größerer Anteil eines Umfangs der Schneidplatten für eine Bearbeitung verwendet.

Insbesondere wird durch das Verfahren erreicht, dass die betreffenden Schneidenabschnitte, nämlich Schruppschneidenabschnitt und Schlichtschneidenabschnitt, jeweils nur in der vorgesehenen Einbausituation in einen Eingriff treten. Es wird sichergestellt, dass an der voranstehenden, für eine Schruppbearbeitung vorgesehenen Schneidplatte kein Schlichtschneidenabschnitt in Eingriff tritt. Vielmehr tritt an der voranstehenden Schneidplatte nur der Schruppschneidenabschnitt in Eingriff.

Außerdem wird sichergestellt, dass an der nachstehenden, für eine Schlichtbearbeitung vorgesehene Schneidplatte, kein Schruppschneidenabschnitt in Eingriff tritt. Vielmehr tritt an der nachstehenden Schneidplatte nur ein Schlichtschneidenabschnitt in Eingriff.

Dies hat den zusätzlichen Vorteil, dass bei einem Einsatz einer zuvor als nachstehende, zur Schlichtbearbeitung verwendeten Schneidplatte als voranstehende Schneidplatte zur Schruppbearbeitung kein verbrauchter / verschlissener Schneidkantenabschnitt in Gebrauch tritt.

Insbesondere ist vorgesehen, dass die Schruppschneidenabschnitte in einem Eckenbereich der Schneidplatte ausgebildet sind.

Die Schlichtschneidenabschnitte sind, davon unterschieden, insbesondere entlang einer Seitenkante der Schneidplatte ausgebildet.

Unter einem Eckenbereich einer Schneidplatte wird insbesondere ein Abschnitt der Schneidplatte verstanden, der eine von der geometrischen Grundform vorgegebene Ecke umgibt. Der Eckenbereich kann insbesondere aufgefasst werden als ein Flächenanteil der Schneidplatte in einer Draufsicht, welcher Flächenanteil sich ausgehend von der betreffenden Ecke in Richtung Plattenmitte erstreckt und zwischen 10% bis 30% einer Gesamtfläche der Schneidplatte einnimmt.

Es ist insbesondere vorgesehen, dass die voranstehende, die Grobbearbeitung bewirkende Schneidplatte so steil angestellt wird, dass sie nur mit dem in einem Eckenbereich der Schneidplatte ausgebildeten Schruppschneidenabschnitt eintaucht. Durch die steile Anstellung sind insbesondere große Spantiefen an der voranstehenden Schneidplatte erzielbar.

Die beim erfindungsgemäßen Verfahren in einer Werkzeugaufnahme angeordneten Schneidplatten sind gleich. Die in einer Einbaulage bezüglich einer Bearbeitungsrichtung voranstehende, für eine Schruppbearbeitung vorgesehene Schneidplatte ist gleich der nachstehenden, für eine Schlichtbearbeitung vorgesehenen Schneidplatte. Es können daher gleiche Platten für die Schruppbearbeitung und die Schlichtbearbeitung verwendet werden. Beim erfindungsgemäßen Verfahren sind also gleiche Schneidplatten unterschiedlich angeordnet. Insbesondere ist vorgesehen, dass in einer Werkzeugaufnahme zwei gleiche Schneidplatten angeordnet sind. Zusätzlich dazu könnten auch noch eine oder mehrere weitere Schneidplatten vorgesehen sein.

Die Ober- und die Unterseiten der Schneidplatten können gleich sein oder sich unterscheiden.

Wenn sich Ober- und Unterseite unterscheiden, ist insbesondere vorgesehen, dass auf einer Seite nur Schlichtschneidenabschnitte und auf der anderen Seite nur Schruppschneidenabschnitte ausgebildet sind.

In einer Variante sind auf der einen Seite nur Schruppschneidenabschnitte und auf der anderen Seite Schlichtschneidenabschnitte sowie weitere Schruppschneidenabschnitte ausgebildet. Diese Weiterbildung trägt dem Umstand Rechnung, dass Schruppschneidenabschnitte einem besonders starken Verschleiß ausgesetzt sind. Diese Variante ist insbesondere für Schneidplatten mit dreieckiger Grundform vorgesehen.

Ein Abschnitt an einem Umfang einer Schneidplatte, an welchem eine Schneidkante für eine Schruppbearbeitung vorgesehen ist, wird als Schruppschneidenabschnitt bezeichnet.

Ein Abschnitt an einem Umfang einer Schneidplatte, an welchem eine Schneidkante für eine Schlichtbearbeitung vorgesehen ist, wird als Schlichtschneidenabschnitt bezeichnet.

Die Schneidplatten weisen in einer Draufsicht insbesondere eine polygonale Grundform auf.

Bevorzugt weisen die Schneidplatten eine gerundete polygonale Grundform auf: das bedeutet, dass die Ecken verrundet sind.

In einem Ausführungsbeispiel weist eine Schneidplatte eine achteckige Grundform auf.

Insbesondere ist die Grundform gestreckt achteckig. Damit ist gemeint, dass in Abweichung von einem regelmäßigen Achteck zwei gegenüberliegende Kanten länger als die übrigen Kanten sind. Insbesondere ist vorgesehen, dass die Schneidplatte mit gestreckt achteckiger Grundform symmetrisch ist bezüglich einer gedachten Mittelachse. Diese Grundform wird auch als L-Form und die Schneidplatte entsprechend als L-Platte bezeichnet.

Diese Form ist besonders vorteilhaft wegen der Möglichkeit, entlang der langen Kanten jeweils einen Schlichtschneidenabschnitt großer Länge auszubilden.

An der schmalen Seite der Schneidplatte dieser Form wird bevorzugt ein Schruppschneidenabschnitt ausgebildet. Eine solche Schneidplatte erlaubt es, an jeder Deckfläche zwei Schruppschneidenabschnitte und zwei Schlichtschneidenabschnitte auszubilden.

Alternativ bevorzugt weist die Schneidplatte eine dreieckig-gerundete Grundform auf. In diesem Fall ist es bevorzugt vorgesehen, entlang der gerundeten Ecken jeweils einen Schruppschneidenabschnitt und entlang der Seitenkanten jeweils einen Schlichtschneidenabschnitt auszubilden. Eine solche Schneidplatte erlaubt es, an jeder Deckfläche drei Schruppschneidenabschnitte und drei Schlichtschneidenabschnitte auszubilden.

Gemäß einer weiteren Ausführungsform weisen die Schneidplatten eine gerundete quadratische Grundform auf.

Für eine Ausführungsform der Schneidplatten mit einer quadratischen Grundform ist es besonders bevorzugt, an der einen Deckfläche einer Schneidplatte lediglich ein oder mehrere Schruppschneidenabschnitte und an der anderen Deckfläche lediglich ein oder mehrere Schlichtschneidenabschnitte auszubilden.

In anderen Worten ist es für Schneidplatten mit einer quadratischen Grundform bevorzugt vorgesehen, Schruppschneidenabschnitte und Schlichtschneidenabschnitte nicht auf der gleichen Deckfläche vorzusehen, sondern die Schneidplatte zweiseitig auszubilden.

Generell ist bei den vorgeschlagenen Schneidplatten bevorzugt durch ein Weiterdrehen ("Indexieren") der Schneidplatte um einen von der Grundgestalt vorgegebenen Winkelbetrag nach Verschleiß einer Schneidkante eine nächste, einer Seitenkante zugeordnete Schneidkante nutzbar. Bei einer quadratischen Grundform sind beispielsweise pro Seite vier Seitenkanten nutzbar, ein Indexieren zur nächsten Seitenkante erfolgt hier durch eine 90° Drehung. Bevorzugt sind die Schneidplatten als Wendeplatten ausgeführt, das heißt, sie weisen zwei nutzbare, abschnittsweise als Spanflächen wirkende Deckflächen auf. Die zwei Deckflächen einer Schneidplatte können bezüglich der darauf ausgebildeten Spanleitstrukturen gleich oder unterschiedlich ausgebildet sein. Bei Verschleiß einer Seite ist durch ein Wenden der Schneidplatte die andere Seite zur Zerspanung nutzbar.

Gemäß einer ersten Variante weisen die Schneidplatten jeweils zwei gleichartige Deckflächen auf, sind also doppelseitig in dem Sinne, dass sich eine Oberseite und eine Unterseite nicht unterscheiden.

Dabei ist bevorzugt vorgesehen, dass an den Deckflächen jeweils wenigstens ein Schruppschneidenabschnitt und davon verschieden und durch einen schneidkantenfreien Abschnitt beabstandet wenigstens ein Schlichtschneidenabschnitt ausgebildet ist.

Je nach Geometrie der Schneidplatte können mehrere Schruppschneidenabschnitte und Schlichtschneidenabschnitte ausgebildet sein.

Mit einem "schneidkantenfreien Abschnitt" ist gemeint, dass entlang einer zwischen einem Schruppschneidenabschnitt und einem Schlichtschneidenabschnitt verlaufenden Außenkante der Schneidplatte deckflächenseitig keine Spanleitstruktur und / oder deckflächenseitige Fase ausgebildet ist.

Besonders bevorzugt erstreckt sich innerhalb des schneidkantenfreien Abschnitts die Deckfläche bis zur Außenkante der Schneidplatte. In anderen Worten liegt der schneidkantenfreie Abschnitt auf dem gleichen Niveau wie die Deckfläche, sodass eine Abstützung bis an den Rand der Schneidplatte ermöglicht wird, wenn diese gewendet wird und in einer Werkzeugaufnahme festgelegt wird. Der schneidkantenfreie Abschnitt vergrößert somit die zur Verfügung stehende Auflagefläche für einen satten Sitz in der Werkzeugaufnahme. Dabei ist besonders hilfreich, dass die über den schneidkantenfreien Abschnitt vergrößerte Auflagefläche sich bis an den Rand der Schneidplatte erstreckt.

Bevorzugt ist zwischen sämtlichen an einer Deckfläche ausgebildeten Schruppschneidenabschnitten und Schlichtschneidenabschnitten ein schneidkantenfreier Abschnitt vorgesehen.

Gemäß einer zweiten Variante sind die Schneidplatten zweiseitig und weisen jeweils zwei ungleiche Deckflächen auf. Demnach ist vorgesehen, dass an der einen Deckfläche einer Schneidplatte lediglich ein oder mehrere Schruppschneidenabschnitte und an der anderen Deckfläche derselben Schneidplatte lediglich ein oder mehrere Schlichtschneidenabschnitte ausgebildet sind. In anderen Worten weisen die Schneidplatten gemäß dieser Variante eine zur Grobbearbeitung (Schruppen) ausgebildete Seite ("Schruppseite") und eine zur Feinbearbeitung (Schlichten) ausgebildete Seite ("Schlichtseite") auf.

Diese Konfiguration ist insbesondere für die zuvor diskutierten Schneidplatten mit einer quadratischen Grundform anwendbar.

Hierzu ist bevorzugt vorgesehen, dass bei einer Verwendung der Schneidplatten zum Schäldrehen zunächst die Schlichtseite zum Einsatz kommt und nach Gebrauch dieser Seite die Schneidplatte gewendet wird und die Schruppseite zum Einsatz kommt.

Diese Abfolge ist besonders vorteilhaft, da die zur Grobbearbeitung eingesetzte Seite einen großen Verschleiß erfährt, wodurch eine sichere Auflage auf der Schruppseite nach einem Einsatz nicht gewährleistet ist.

Auch in dieser Ausprägung des Verfahrens ist es hinsichtlich der Schneidplatten vorteilhaft und bevorzugt vorgesehen, dass zwischen Schruppschneidenabschnitten bzw. Schlichtschneidenabschnitten schneidkantenfreie Abschnitte ausgebildet sind. Bevorzugt ist zwischen sämtlichen Schruppschneidenabschnitten bzw. Schlichtschneidenabschnitten jeder Seite jeweils ein schneidkantenfreier Abschnitt vorgesehen.

Durch die Beabstandung der jeweiligen Schneidenabschnitte wird, wie oben beschrieben, eine verbesserte Abstützung der Schneidplatte in einer Werkzeugaufnahme erzielt.

An Deckflächen der Schneidplatten sind abschnittsweise Spanflächen mit Spanleitstrukturen ausgebildet.

Spanleitstrukturen entlang eines Schruppschneidenabschnitts sind in der Regel und bevorzugt gröber strukturiert als Spanleitstrukturen entlang eines Schlichtschneidenabschnitts.

Schruppschneidenabschnitte weisen in der Regel und bevorzugt größere Fasenbreiten auf als Schlichtschneidenabschnitte. Ferner weist in einer Draufsicht eine dem Schruppschneidenabschnitt zugeordnete Spanleitstruktur eine größere Fläche auf als eine Spanleitstruktur des Schlichtschneidenabschnitts. Schruppschneidenabschnitte laufen insbesondere gekrümmt in einer Ellipse oder einem Radius aus, im Gegensatz zu Schlichtschneidenabschnitten, die bevorzugt gerade auslaufen.

Ferner weisen Schlichtschneidenabschnitte bevorzugt eine Stützfase auf. Schruppschneidenabschnitte weisen bevorzugt keine Stützfase auf.

Beim erfindungsgemäßen Verfahren ist vorgesehen, dass in einer Einbaulage die bezüglich einer Bearbeitungsrichtung voranstehende Schneidplatte mit einem ersten Anstellwinkel angestellt wird und die bezüglich der Bearbeitungsrichtung nachstehende Schneidplatte mit einem vom ersten Anstellwinkel verschiedenen zweiten Anstellwinkel angestellt wird, derart dass die voranstehende Schneidplatte nur mit einem Schruppschneidenabschnitt im Eingriff steht und die nachstehende Schneidplatte nur mit einem Schlichtschneidenabschnitt im Eingriff steht.

Insbesondere ist vorgesehen, dass gegebenenfalls ausgebildete schneidkantenfreie Abschnitte der voranstehenden und der nachstehenden Schneidplatte nicht in Eingriff mit dem Werksstück treten.

Bevorzugt ist der erste Anstellwinkel dem Betrage nach größer als der zweite Anstellwinkel. In anderen Worten ist die voranstehende, als Schruppplatte wirkende Schneidplatte steiler angestellt als die nachstehende, als Schlichtplatte wirkende Schneidplatte.

Bevorzugt beträgt der Anstellwinkel der voranstehenden Schneidplatte, der erste Anstellwinkel, zwischen 8° und 30°, weiter bevorzugt zwischen 15° und 25°.

Dabei gilt weiter bevorzugt für Schneidplatten mit quadratischer Grundform, sogenannte S-Platten, ein erster Anstellwinkel zwischen 10° bis 25°.

Für gestreckt achteckige Schneidplatten, sogenannte L-Platten, liegt Anstellwinkel der voranstehenden Schneidplatte weiter bevorzugt zwischen 5° und 15°, insbesondere zwischen 7° und 12°, besonders bei 10°.

Der Anstellwinkel der nachstehenden Schneidplatte, der zweite Anstellwinkel, beträgt bevorzugt zwischen 0° und 5°. Insbesondere kann vorgesehen sein, dass der Anstellwinkel der nachstehenden Schneidplatte 0° beträgt, das heißt, dass diese Schneidplatte bezüglich der Haupterstreckungsrichtung der im Eingriff befindlichen Schlichtschneide parallel zur Werkstückoberfläche angeordnet ist.

Insbesondere unterscheiden sich beim erfindungsgemäßen Verfahren die maximalen Spantiefen - ap - der voranstehenden und der nachstehenden Schneidplatten.

Insbesondere ist vorgesehen, dass eine Spantiefe der voranstehenden, als Schruppplatte wirkenden Schneidplatte zwischen 0,5 mm und 8 mm, insbesondere zwischen 3 mm und 6 mm beträgt. Dies trifft insbesondere für S-Platten zu. Für Schneidplatten in einer L-Form und in einer N-Form liegt eine Spantiefe der voranstehenden Schneidplatte insbesondere zwischen 0,5 mm und 3 mm.

Die Spantiefe der nachstehenden Schneidplatte beträgt bevorzugt zwischen 0,1 mm und 2 mm, weiter bevorzugt zwischen 0,3 mm und 1 mm. Besonders bevorzugt beträgt die Spantiefe der nachstehenden Schneidplatte höchstens 0,8 mm.

Mit der Wahl einer geringen Spantiefe der nachstehenden Schneidplatte, welche die Schlichtfunktion übernimmt, sind besondere Vorteile verbunden: bei einer geringen Spanabnahme durch die nachstehende Schneidplatte kann die Spanleitstruktur des den Materialabtrag bewirkenden Schlichtschneidenabschnitts besonders schmal und / oder mit geringer Profilierung ausgebildet werden.

Dies ist vorteilhaft, um in einer gewendeten Einbaulage der Schneidplatte eine große Auflagefläche zur Verfügung zu stellen.

"Schmal" bedeutet in diesem Zusammenhang, dass eine maximale Tiefenerstreckung der Spanleitstruktur in Richtung einer Plattenmitte weniger als 25% eines Abstands des Schlichtschneidenabschnitts von der Plattenmitte beträgt.

Die Spantiefen der voranstehenden und der nachstehenden Platte sind additiv. Damit ist gemeint, dass sich eine gesamte, von beiden Schneidplatten erzielte Spantiefe aus der Summe der jeweiligen Spantiefen der voranstehenden und der nachstehenden Schneidplatte ergibt.

Entsprechend ist vorgesehen, dass die bezüglich der Bearbeitungsrichtung voranstehende Schneidplatte bezüglich einer von der nachstehenden Schneidplatte erzeugten Oberfläche des Werkstücks derart zugestellt ist, dass der im Eingriff mit dem Werkstück befindliche Schruppschneidenabschnitt der voranstehenden Schneidplatte auf eine gedachte Mittelachse des Werkstücks bezogen radial weiter außen liegt als der im Eingriff mit dem Werkstück befindliche Schlichtschneidenabschnitt der nachfolgenden Schneidplatte. Der radiale Versatz entspricht der Spantiefe der nachstehenden Schneidplatte.

Bevorzugt ist vorgesehen, dass ein Schlichtschneidenabschnitt einen Nebenschneidenabschnitt und einen dazu in Richtung einer Plattenmitte abgewinkelt verlaufenden Hauptschneidenabschnitt aufweist, wobei der Nebenschneidenabschnitt im Wesentlichen parallel zu einer Mittelachse des Werkstücks angestellt wird und der Hauptschneidenabschnitt so angestellt wird, dass dieser wenigstens 80% einer vom Schlichtschneidenabschnitt abzutragenden Spantiefe erfasst. Das bedeutet, dass der Hauptschneidenabschnitt den vorwiegenden Materialabtrag der nachstehenden Schneidplatte übernimmt. Der Nebenschneidenabschnitt übernimmt im Wesentlichen eine Glättfunktion.

Dazu kann es bevorzugt vorgesehen sein, eine Spanleitstruktur des Nebenschneidenabschnitts schmäler auszubilden als die des Hauptschneidenabschnitts, denn am Nebenschneidenabschnitt findet nur eine geringe Spanabnahme statt.

Ferner wird Schutz begehrt für eine Anordnung zum Schäldrehen umfassend eine Werkzeugaufnahme und wenigstens zwei Schneidplatten.

Der entsprechende Anspruch ist auf ein System aus Werkzeugaufnahme, insbesondere Kassette, für ein Schäldrehen umfassend wenigstens zwei Plattensitze und daran angeordnet gleiche Schneidplatten gerichtet. Insbesondere ist das System zur Durchführung eines Verfahrens zum Schäldrehen gemäß Anspruch 1 geeignet und vorgesehen.

Schutz wird auch begehrt für eine Schneidplatte zum Schäldrehen wie in den betreffenden Ansprüchen definiert.

Demnach ist vorgesehen, dass Schruppschneidenabschnitte und Schlichtschneidenabschnitte zumindest auf einer Seite des jeweiligen Abschnitts räumlich voneinander getrennt sind. Räumlich getrennt oder beabstandet bedeutet, dass zwischen einem Schruppschneidenabschnitt und einem Schlichtschneidenabschnitt ein schneidkantenfreier Bereich besteht.

Die offenbarten Schneidplatten weisen durch die Ausbildung von voneinander verschiedenen Schrupp- und Schlichtschneidenabschnitten eine ausgezeichnete Materialausnutzung auf.

Eine relative Lage der Schrupp- und Schlichtschneidenabschnitte folgt aus der geometrischen Grundform der Schneidplatte. Insbesondere werden als geometrische Grundformen vorgeschlagen: Schneidplatten mit dreieckiger Grundform (sogenannte N-Platten), Schneidplatten mit gestreckt achteckiger Grundform (sogenannte L-Platten), Schneidplatten mit quadratischer Grundform (sogenannte S-Platten).

Die Erfindung wird im Folgenden unter Bezugnahme auf die beigefügten Figuren näher erläutert.

Von den Figuren zeigen:
- Fig. 1:: eine Anordnung zum Schäldrehen nach dem Stand der Technik
- Fig. 2:: eine Anordnung zum Schäldrehen nach einem ersten Ausführungsbeispiel
- Fig. 3:: eine Anordnung zum Schäldrehen nach einem weiteren Ausführungsbeispiel
- Fig. 4:: ein Detail zur Schneidplatte aus Figur 3
- Fig. 5:: eine Anordnung zum Schäldrehen nach einem weiteren Ausführungsbeispiel
- Fig. 6: einen Schnitt einer Schneidplatte aus Figur 5
- Fig. 7: ein Ausführungsbeispiel einer Schneidplatte
- Fig. 8: einen Schnitt der Schneidplatte aus Figur 7
- Fig. 9: ein Ausführungsbeispiel einer Schneidplatte
- Fig. 10: ein weiteres Ausführungsbeispiel einer Schneidplatte
- Fig. 11a und 11b: Ausführungsbeispiele von Schneidplatten
- Fig. 12a-12c: ein Ausführungsbeispiel einer Werkzeugaufnahme in verschiedenen Ansichten
- Fig. 13a-13c: ein weiteres Ausführungsbeispiel einer Werkzeugaufnahme in verschiedenen Ansichten
- Fig. 14: Details einer Schneidplatte nach einem Ausführungsbeispiel
- Fig. 15: Details einer Schneidplatte nach einem weiteren Ausführungsbeispiel
- Fig. 16: Details einer Schneidplatte nach einem weiteren Ausführungsbeispiel
- Fig. 17: Anordnung von Schneidplatten nach einem weiteren Ausführungsbeispiel
- Fig. 18: ein Ausführungsbeispiel einer Schneidplatte und
- Fig. 19: diese Schneidplatte in einer Seitenansicht
- Fig. 20-23: Schneidplatten nach einem weiteren Ausführungsbeispiel
- Fig. 24-28: Schneidplatten nach einem weiteren Ausführungsbeispiel
- Fig. 29-33: Schneidplatten nach einem weiteren Ausführungsbeispiel

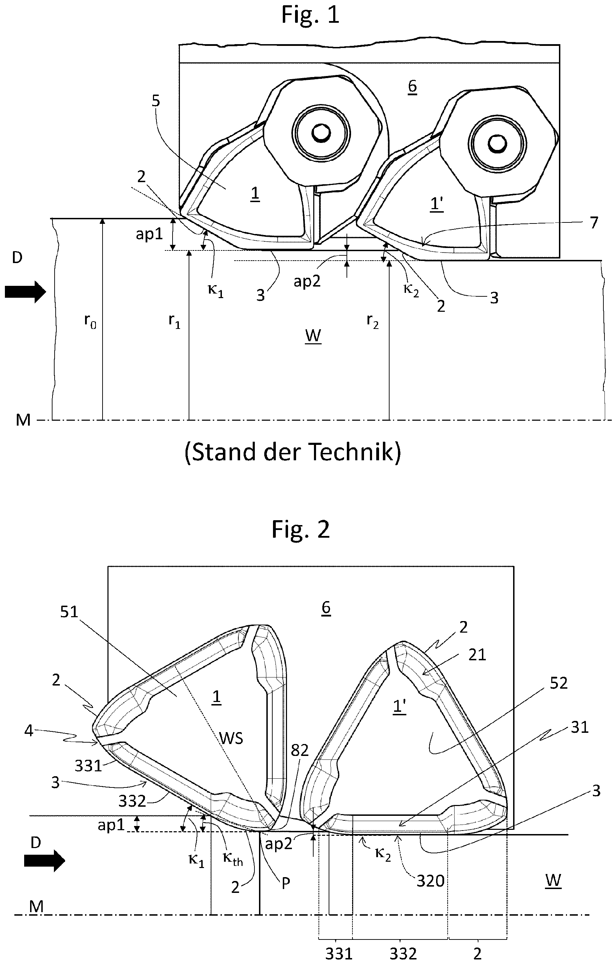

Figur 1 zeigt eine Anordnung zweier gleicher Schneidplatten 1, 1' zum Schäldrehen nach dem Stand Technik.

Die Schneidplatten 1, 1' weisen eine dreieckige Grundform nach ISO-Code "W" mit gewinkelt konvexen Seitenkanten auf. Die an jeder Seitenkante ausgebildeten Schneidenabschnitte 2, 3 verlaufen mit einem Außenwinkel von rund 210° zueinander. Die Schneidplatten 1, 1' sind dreifach indexierbar. Durch eine Drehung um 120° können unverbrauchte Schneidkanten in eine Bearbeitungsposition gebracht werden.

Die Schneidplatten 1, 1' treten mit einem Werkstück W in einen spanabhebenden Eingriff, wobei bei einem Schäldrehen, wie hier gezeigt, in der Regel das Werkstück translatorisch in einer Bearbeitungsrichtung D entlang einer Mittelachse M des Werkstücks W bewegt wird und die Schneidplatten 1, 1' in einem Flugkreis um die Mittelachse M rotieren. Die Bewegungsrichtung der Schneidplatten 1, 1' ist normal zur Zeichnungsebene dem Betrachter entgegengewandt.

Zur Diskussion der Eingriffssituation ist es jedoch unerheblich, ob das Werkstück W rotiert oder die Schneidplatten 1, 1' .

Die Schneidplatten 1, 1' sind in einer Werkzeugaufnahme 6 so angeordnet, dass die bezüglich einer Bearbeitungsrichtung D voranstehende, das heißt, zuerst in einen Eingriff tretende, Schneidplatte 1 mit einem bezüglich der Bearbeitungsrichtung D ansteigenden Schruppschneidenabschnitt 2 die Schruppbearbeitung übernimmt. Die vom Schruppschneidenabschnitt 2 abgenommene erste Spantiefe ap1 reduziert einen Radius des Werkstücks W von einem ursprünglichen Radius r₀ auf einen ersten Radius r₁.

Die nachstehende Schneidplatte 1' übernimmt mit einem parallel zu der von der voranstehenden Schneidplatte 1 geschaffenen Werkstückoberfläche ausgerichteten Schlichtschneidenabschnitt 3 die Schlichtbearbeitung.

Die vom Schlichtschneidenabschnitt 3 der nachstehenden Schneidplatte 1' abgenommene zweite Spantiefe ap2 reduziert einen Radius des Werkstücks W vom ersten Radius r₁ auf einen zweiten Radius r₂.

Die zweite Spantiefe ap2 ist deutlich geringer als die erste Spantiefe ap1.

Die Schneidplatten 1, 1' sind mit dem gleichen Anstellwinkel angestellt, das heißt κ₁ = κ₂ .

Die Schlichtschneidenabschnitte 3 der Schneidplatten 1, 1' verlaufen parallel zur Oberfläche des Werkstücks W.

Bei der nachstehenden Schneidplatte 1' steht der bis zur Spantiefe ap2 zugestellte Teil des Schruppschneidenabschnitts 2 im Eingriff.

Der Schruppschneidenabschnitt 2 zur Schruppbearbeitung und der Schlichtschneidenabschnitt 3 zur Schlichtbearbeitung sind verbunden. Die Schneidplatte 1 weist eine umlaufend durchgängige Schneidkante mit einer an der Deckfläche durchgängig ausgebildeten Spanleitstruktur 7 auf.

Nachteilig an der gezeigten Anordnung und an dem damit verbundenen Verfahren zum Schäldrehen ist es, dass für beide Schneidoperationen, also die Schruppbearbeitung und die Schlichtbearbeitung die gleichen Abschnitte der Schneidplatten 1, 1' zum Einsatz kommen. Wird eine zunächst zur Schlichtbearbeitung eingesetzte Schneidplatte bei Erreichen eines für eine weitere Nutzung zur Schlichtbearbeitung inakzeptablen Verschleißes zur Schruppbearbeitung eingesetzt, so hat die Schneidplatte in der Position zur Schruppbearbeitung von Anfang an verbrauchte Schneidkanten.

Ferner nachteilig ist es, dass die an den Schneidkanten solche Spanleitstrukturen 7 ausgebildet sein müssen, die für beide Schneidoperationen, also die Schruppbearbeitung und die Schlichtbearbeitung gleichermaßen funktionieren.

Dies stellt einen ungünstigen Kompromiss dar.

Insbesondere nachteilig an einer solchen Anordnung ist ferner, dass beide Schneidplatten jeweils mit voller Länge der Nebenschneiden im Eingriff stehen. Dies bewirkt hohe Passivkräfte bei der Zerspanung. Ein erhöhter Wärmeeintrag durch Reibung ist die Folge. Außerdem muss den hohen Passivkräften durch eine besonders steife Konstruktion begegnet werden.

Figur 2 zeigt eine erfindungsgemäße Anordnung in einem ersten Ausführungsbeispiel, anhand dessen das erfindungsgemäße Verfahren und erfindungsgemäße Schneidplatten näher erläutert werden sollen. Gezeigt ist eine Anordnung zweier Schneidplatten 1, 1' in einer schematisch skizzierten Werkzeugaufnahme 6 .

Schematisch dargestellt ist ferner ein Werkstück - W - sowie eine Bearbeitungsrichtung D, in welcher sich das Werkstück W relativ zur Werkzeugaufnahme 6 longitudinal bewegt.

Die Schneidplatten 1, 1' weisen eine dreieckige Grundgestalt mit abgerundeten Ecken auf. Die Seitenkanten sind im vorliegenden Ausführungsbeispiel von geraden Abschnitten gebildet.

Die Schneidplatten 1, 1' weisen gleichartige Deckflächen 51, 52 auf, insbesondere weisen die Schneidplatten 1, 1' jeweils zwei gleichartige Deckflächen auf, sind also doppelseitig in dem Sinne, dass sich eine Oberseite und eine Unterseite nicht unterscheiden.

Weiters ist vorgesehen, dass an den Deckflächen 51, 52 jeweils eine Mehrzahl, vorliegend genau drei, Schruppschneidenabschnitte 2 und davon verschieden eine Mehrzahl, vorliegend genau drei, Schlichtschneidenabschnitte 3 ausgebildet ist. Der geometrischen Grundform folgend, verlaufen die Schlichtschneidenabschnitte 3 jeweils zu einem Innenwinkel von 60° zueinander.

Ein Schruppschneidenabschnitt 2 bezeichnet einen Abschnitt einer an einer Seitenkante der Schneidplatte 1, 1' ausgebildeten Schneidkante, welcher für eine Grobbearbeitung (Schruppen) vorgesehen ist.

Ein Schlichtschneidenabschnitt 3 bezeichnet einen Abschnitt einer an einer Seitenkante der Schneidplatte 1, 1' ausgebildeten Schneidkante, welcher für eine Feinbearbeitung (Schlichten) vorgesehen ist.

Ein Schlichtschneidenabschnitt 3 unterscheidet sich von einem Schruppschneidenabschnitt 2 insbesondere dadurch, dass eine entlang des Schlichtschneidenabschnitt 3 spanflächenseitig ausgebildete Fase schmäler ist als eine spanflächenseitig ausgebildete Fase entlang eines Schruppschneidenabschnitts 2.

Alternativ oder zusätzlich kann insbesondere vorgesehen sein, dass eine dem Schruppschneidenabschnitt 2 zugeordnete Spanleitstruktur 21 sich weiter in Richtung einer Plattenmitte erstreckt als eine dem Schlichtschneidenabschnitt 3 zugeordnete Spanleitstruktur 31.

Eine größere Ausdehnung einer Spanleitstruktur erlaubt eine Umlenkung größerer Spanquerschnitte. Insbesondere ist entlang der Schlichtschneidenabschnitte 3 eine Stützfase 320 mit einem Stützfasenwinkel von 3° bis 6° ausgebildet. Eine Stützfase ist eine an einer Freifläche ausgebildete Fase im Gegensatz zu (Schutz)fasen, welche spanflächenseitig gebildet sind.

An Schruppschneidenabschnitten 2 besteht insbesondere keine Stützfase.

Der Schruppschneidenabschnitt 2 hat einen zumindest teilweise gekrümmten Verlauf. Insbesondere ist ein Verlauf der Krümmung durch eine Ellipse darstellbar oder anzunähern, welche mit ihrer Hauptachse parallel zur angrenzenden Seitenkante liegt, derart dass die Kontur des an den Schruppschneidenabschnitt 2 angrenzenden Schlichtschneidenabschnitts 3 tangential in den Schruppschneidenabschnitt 2 übergeht.

Bevorzugt nimmt die Krümmung des Schruppschneidenabschnitts 2 in Richtung ausgangsseitige Ecke 82 zu.

Im vorliegenden Ausführungsbeispiel und für dreieckige Schneidplatten bevorzugt sind an jeder der Schneidplatten 1, 1' drei

Schruppschneidenabschnitte 2 und drei Schlichtschneidenabschnitte 3 ausgebildet.

Zwischen einem ausgangsseitigen Ende eines Schruppschneidenabschnitts 2 und einem eingangsseitigen Beginn eines Schlichtschneidenabschnitts 3 befindet sich bevorzugt jeweils ein schneidkantenfreier Abschnitt 4.

Im vorliegenden Ausführungsbeispiel nicht verwirklicht, aber ebenfalls möglich ist es, auch zwischen einem ausgangsseitigen Ende eines Schlichtschneidenabschnitts 3 und einem eingangsseitigen Beginn eines Schruppschneidenabschnitts 2 einen schneidkantenfreien Abschnitt 4 vorzusehen.

Vorliegend ist der Fall verwirklicht, dass Schruppschneidenabschnitte 2 und Schlichtschneidenabschnitte 3 nur auf einer Seite des jeweiligen Abschnitts 2, 3 räumlich voneinander getrennt sind.

Der Schruppschneidenabschnitt 2 ist jeweils an den Ecken der Schneidplatten 1, 1' ausgebildet.

Der Schlichtschneidenabschnitt 3 ist jeweils entlang der Seitenkanten der Schneidplatten 1, 1' ausgebildet.

Die voranstehende Schneidplatte 1 mit einem ersten Anstellwinkel κ₁ angestellt, welcher hier zwischen einer Tangente an die eingangsseitige Seitenkante und der Mittelachse M definiert ist.

Der Anstellwinkel κ₁ der voranstehenden Schneidplatte 1 beträgt im vorliegenden Ausführungsbeispiel 30°. Ein Anstellwinkel wird allgemein als Winkel zwischen Schneidkante und Vorschubrichtung angegeben.

Der bevorzugte Bereich für den Anstellwinkel κ₁ der voranstehenden Schneidplatte 1 beträgt für diese Form der Schneidplatte 1 zwischen 20° und 35°, insbesondere zwischen 25° und 30°.

Der Anstellwinkel κ₁ der voranstehenden Schneidplatte 1 lässt sich auch vorteilhaft in Bezug auf die Lage der nachstehenden Schneidplatte 1' beschreiben: die nachstehende Schneidplatte 1' ist so angestellt, dass eine Seitenkante parallel zur Mittelachse M verläuft, was einem Anstellwinkel von Null Grad entspricht. Die voranstehende Schneidplatte 1 ist gegenüber der nachstehenden Schneidplatte 1' um den Anstellwinkel κ₁ steiler angestellt.

Der Anstellwinkel κ₁ der voranstehenden Schneidplatte 1 kann bei dieser Plattenform auch so verstanden werden, dass die voranstehende Schneidplatte 1 gegenüber der nachstehenden Schneidplatte 1' vorliegend um 90° gegen den Uhrzeigersinn verdreht ist, wodurch - aus der Geometrie der Schneidplatte 1 mit in 120° zueinander verlaufenden Seitenkanten folgend - der Schruppschneidenabschnitt 2 der voranstehenden Schneidplatte 1 mit einem Anstellwinkel κ1 von 30° im Eingriff steht. Bei einer wie hier mit Radius ausgeführten N-Platte wird die voranstehende Schneidplatte 1 gegenüber der nachstehenden Schneidplatte 1' vorliegend um 60° gegen den Uhrzeigersinn verdreht.

Der Anstellwinkel κ₁ der voranstehenden Schneidplatte 1 wird bevorzugt so gewählt, dass ein ausgangsseitiger letzter Berührpunkt P des Schruppschneidenabschnitts 2 vor dem Ende des Schruppschneidenabschnitts 2 liegt.

In anderen Worten ist bevorzugt vorgesehen, dass ein ausgangsseitiges Ende des Schruppschneidenabschnitts 2 keinen Kontakt mehr zu einer Werkstückoberfläche hat. Insbesondere ist vorgesehen, sodass eine ausgangsseitige Ecke 82 von der Werkstückoberfläche beabstandet ist.

Ein theoretischer Anstellwinkel κₜₕ kann definiert werden zwischen
- einer Verbindung des ausgangsseitigen letzten Berührpunkts P und dem eingangsseitigen ersten Berührpunkt, an welchem die erste Spantiefe ap1 der voranstehende Schneidplatte 1 abgelesen werden kann, und
- der Bearbeitungsrichtung D, hier entsprechend einer Parallelen zur Mittelachse M. Der theoretische Anstellwinkel κₜₕ beträgt vorliegend rund 18°.

Ferner ist die bezüglich der Bearbeitungsrichtung D voranstehende Schneidplatte 1 (in der Darstellung links) so zugestellt, dass die Schneidplatte 1 mit einem an einer Ecke ausgebildeten Schruppschneidenabschnitt 2 mit einer maximalen ersten Spantiefe ap1 im Eingriff mit dem Werkstück W steht.

An der abschnittsweise als Spanfläche ausgebildeten Deckfläche 51 ist dem Schruppschneidenabschnitt 2 eine Spanleitstruktur 21 zugeordnet.

Die dem Schruppschneidenabschnitt 2 zugeordnete Spanleitstruktur 21 ist dabei bevorzugt bezüglich einer Winkelsymmetralen WS der Ecke der Schneidplatte 1 asymmetrisch ausgebildet in dem Sinne, dass ein bezüglich der Winkelsymmetralen WS in Bearbeitungsrichtung vorne (eingangsseitig) liegender Flächenanteil der Spanleitstruktur 21 größer ist als ein bezüglich der Winkelsymmetralen WS hinten liegender Flächenanteil. Der Übersichtlichkeit halber sind in der Zeichnung nicht alle Schruppschneidenabschnitte 2 und dazugehörige Spanleitstrukturen 21 durch Bezugszeichen hervorgehoben.

Die bezüglich der Bearbeitungsrichtung D nachstehende Schneidplatte 1' ist so zugestellt, dass die Schneidplatte 1' mit einem an einer Seitenkante ausgebildeten Schlichtschneidenabschnitt 3 mit einer maximalen zweiten Spantiefe ap2 im Eingriff mit dem Werkstück W steht.

Die Schneidplatte 1' ist mit einem vom ersten Anstellwinkel κ₁ verschiedenen zweiten Anstellwinkel κ₂ angestellt. Der zweite Anstellwinkel κ₂ ist kleiner als der erste Anstellwinkel κ₁. Im vorliegenden Ausführungsbeispiel beträgt der zweite Anstellwinkel κ₂ 0° (Null Grad). Das bedeutet, dass die zweite Schneidplatte 1' mit dem Schlichtschneidenabschnitt 3 parallel zur Mittelachse M verläuft.

Die Schneidplatten 1, 1' sind derart in der Werkzeugaufnahme 6 angeordnet, dass die voranstehende Schneidplatte 1 nur mit einem Schruppschneidenabschnitt 2 im Eingriff steht und die nachstehende Schneidplatte 1' nur mit einem Schlichtschneidenabschnitt 3 im Eingriff steht. Damit wird erreicht, dass es an der voranstehenden Schneidplatte 1 zu keinem Verschleiß eines Schlichtschneidenabschnitts 3 kommt und dass es an der nachstehenden Schneidplatte 1' zu keinem Verschleiß eines Schruppschneidenabschnitts 2 kommt.

Die Werkzeugaufnahme 6 ist dazu ausgestaltet, eine erste Schneidplatte 1 derart orientiert aufzunehmen und festzulegen, dass die erste, für ein Schruppen vorgesehene Schneidplatte 1 mit einem ersten Anstellwinkel κ1 angestellt ist und der Schruppschneidenabschnitt 2 in einer Bearbeitungsposition steht.

Die Werkzeugaufnahme 6 ist ferner dazu ausgestaltet, eine zweite Schneidplatte 1' derart orientiert aufzunehmen und festzulegen, dass die zweite, für ein Schlichten vorgesehene Schneidplatte 1' mit einem vom ersten Anstellwinkel κ1 verschiedenen zweiten Anstellwinkel κ2 angestellt ist, welcher kleiner ist als der erste Anstellwinkel und der Schlichtschneidenabschnitt 3 in einer Bearbeitungsposition steht.

Ein Schlichtschneidenabschnitt 3 ist insbesondere in einen eingangsseitigen Hauptschneidenabschnitt 331 und einen ausgangsseitigen Nebenschneidenabschnitt 332 unterteilt. Hauptschneidenabschnitt 331 und Nebenschneidenabschnitt 332 sind miteinander verbunden, unterscheiden sich aber dadurch, dass der Hauptschneidenabschnitt 331 gegenüber dem Nebenschneidenabschnitt 332 einen in Richtung Plattenmitte abgewinkelten Verlauf zeigt.

Eine solche Gliederung des Schlichtschneidenabschnitts 3 ist insbesondere vorteilhaft, als dadurch der Hauptschneidenabschnitt 331 zur Spanabnahme entsprechend der zweiten Spantiefe ap2 eingerichtet ist, während der gerade und parallel zur Mittelachse M verlaufende Nebenschneidenabschnitt 332 eine reine Glättfunktion übernimmt.

Am Nebenschneidenabschnitt 332 ist insbesondere eine Stützfase 320 von einem Stützfasenwinkel zwischen 3° und 6° ausgebildet.

Ein ausgangsseitiger Übergang des Nebenschneidenabschnitt 332 zum angrenzenden Schruppschneidenabschnitt 2 ist insbesondere dadurch gekennzeichnet, dass sich eine Breite der spanflächenseitig ausgebildeten Fase erhöht. Der Schruppschneidenabschnitt 2 weist eine breitere Fase auf als der Schlichtschneidenabschnitt 3.

Die erste Spantiefe ap1 der voranstehende Schneidplatte 1, welche mit einem Schruppschneidenabschnitt 2 im Eingriff steht, ist bevorzugt so gewählt, dass der Schruppschneidenabschnitt 2 voll im Eingriff steht, der eingangsseitig (in der Darstellung also links) daran angrenzende Nebenschneidenabschnitt 332 des Schlichtschneidenabschnitts 3 jedoch keinen Kontakt zum Werkstück W hat.

Damit wird eine zur Verfügung stehende Schneidenlänge des Schruppschneidenabschnitts 2 ideal ausgenutzt. Zudem wird vermieden, dass ein, durch einen vorherigen Gebrauch möglicherweise verschlissener Nebenschneidenabschnitt 332 am Materialabtrag beteiligt ist.

Für die Praxis ist es bevorzugt vorgesehen, dass - bezogen auf eine Seitenansicht der Schneidplatte 1, 1' - der Nebenschneidenabschnitt 332 auf gleichem Niveau liegt wie der Schruppschneidenabschnitt 2. In anderen Worten besteht bevorzugt kein Höhenversatz der Schneidkante zwischen dem Nebenschneidenabschnitt 332 und dem Schruppschneidenabschnitt 2. Damit wird erreicht, dass bei gröberen Unrundheiten des Werkstücks W selbst bei einem Eintritt des Nebenschneidenabschnitts 332 an der voranstehenden Schneidplatte 1 ein kontinuierlicher Spanabtrag ohne Riefenbildung erfolgt.

Die Verhältnisse werden vorliegend für einen hier gezeigten Drehsinn entlang einer Linksspirale in einer Vorschubrichtung diskutiert. Es versteht sich, dass für eine umgekehrte Bearbeitungsrichtung die Anordnung der Schneidenabschnitte an den Schneidplatten 1, 1' entsprechend gespiegelt ausgeführt würde.

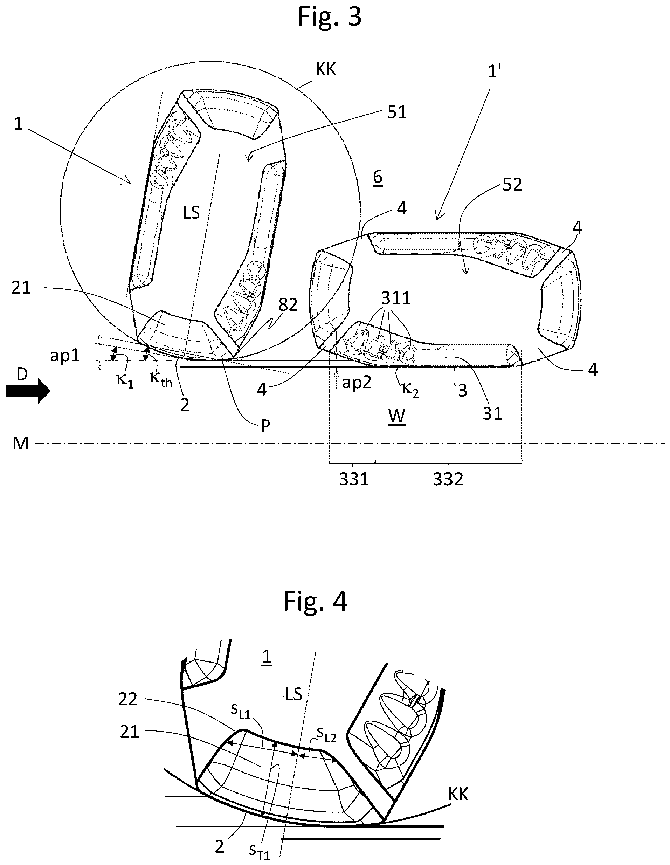

Figur 3 zeigt eine erfindungsgemäße Anordnung in einem weiteren Ausführungsbeispiel, anhand dessen das erfindungsgemäße Verfahren und erfindungsgemäße Schneidplatten näher erläutert werden sollen.

Die Werkzeugaufnahme 6 und das Werkstück W sind angedeutet.

Die Schneidplatten 1, 1' sind in diesem Ausführungsbeispiel verrundet 8-eckig mit gestreckter Form. Dieser Plattentyp wird auch als L-Platte bezeichnet.

Die langen Seitenkanten verlaufen bevorzugt parallel. Die kurzen Seitenkanten an den Stirnseiten der gezeigten L-Platte verlaufen generell 90° zu den langen Seitenkanten und sind hier und bevorzugt gerundet ausgeführt.

Wie auch im Ausführungsbeispiel nach Figur 2 sind die Schneidplatten 1, 1' derart angeordnet, dass die voranstehende Schneidplatte 1 entlang des und nur mit einem Schruppschneidenabschnitt 2 im Eingriff steht und die nachstehende Schneidplatte 1' nur mit einem Schlichtschneidenabschnitt 3 im Eingriff steht. Die Schruppschneidenabschnitte 2 und die Schlichtschneidenabschnitte 3 sind in diesem bevorzugten Ausführungsbeispiel jeweils über einen schneidkantenfreien Abschnitt 4 beabstandet.

Vorliegend ist also der Fall verwirklicht, dass Schruppschneidenabschnitte 2 und Schlichtschneidenabschnitte 3 auf beiden Seiten des jeweiligen Abschnitts 2, 3 räumlich voneinander getrennt sind.

Die bezüglich der Bearbeitungsrichtung D voranstehende Schneidplatte 1 (in der Darstellung links) ist so zugestellt, dass die erste Schneidplatte 1 mit dem Schruppschneidenabschnitt 2 mit einer maximalen ersten Spantiefe ap1 im Eingriff mit dem Werkstück W steht.

Der Anstellwinkel κ1 der voranstehenden Schneidplatte 1 beträgt im vorliegenden Ausführungsbeispiel rund 10°. Jedenfalls ist die voranstehende Schneidplatte 1 wesentlich steiler angestellt als die nachstehende Schneidplatte 1'. Der Anstellwinkel κ1 der voranstehenden Schneidplatte 1 kann bei dieser Plattenform angegeben werden als der Winkel zwischen einer Tangente an den im Eingriff befindlichen Schruppschneidenabschnitt 2 und der Mittelachse M. Der Anstellwinkel κ1 der voranstehenden Schneidplatte 1 kann bei dieser Plattenform - mit im Winkel von 90° zueinander verlaufenden Seitenkanten - auch so verstanden werden, dass die voranstehende Schneidplatte 1 gegenüber der nachstehenden Schneidplatte 1' vorliegend um 80° gegen den Uhrzeigersinn verdreht ist, wodurch der Schruppschneidenabschnitt 2 der voranstehenden Schneidplatte 1 mit einem Anstellwinkel κ1 von 10° im Eingriff kommt. Bevorzugt liegt der Anstellwinkel κ1 der voranstehenden Schneidplatte 1 bei der hier gezeigten verrundet 8-eckigen, gestreckten Grundform zwischen 2° und 20°, weiter bevorzugt zwischen 5° und 15°, insbesondere bei 10° ± 3° .

Ein theoretischer Anstellwinkel κₜₕ kann definiert werden zwischen
- einer Verbindung des ausgangsseitigen letzten Berührpunkts P und dem eingangsseitigen ersten Berührpunkt, an welchem die erste Spantiefe ap1 der voranstehende Schneidplatte 1 abgelesen werden kann, und
- der Bearbeitungsrichtung D, hier entsprechend einer Parallelen zur Mittelachse M. Der theoretische Anstellwinkel κₜₕ beträgt vorliegend rund 11°.

Bevorzugt ist eine Anstellung der voranstehenden Schneidplatte 1 so gewählt, dass ein ausgangsseitiger letzter Berührpunkt P des Schruppschneidenabschnitts 2 vor dem Ende des Schruppschneidenabschnitts 2 liegt. In anderen Worten ist bevorzugt vorgesehen, dass ein ausgangsseitiges Ende des Schruppschneidenabschnitts 2 keinen Kontakt zu einer Werkstückoberfläche hat. Insbesondere ist vorgesehen, sodass eine ausgangsseitige Ecke 82 von der Werkstückoberfläche beabstandet ist.

Die bezüglich der Bearbeitungsrichtung D nachstehende Schneidplatte 1' ist so zugestellt, dass die Schneidplatte 1' mit einem an einer langen Seitenkante ausgebildeten Schlichtschneidenabschnitt 3 mit einer maximalen zweiten Spantiefe ap2 im Eingriff mit dem Werkstück W steht.

Die Schneidplatte 1' ist mit einem vom ersten Anstellwinkel κ₁ verschiedenen zweiten Anstellwinkel κ₂ angestellt. Der zweite Anstellwinkel κ₂ ist kleiner als der erste Anstellwinkel κ₁. Im vorliegenden Ausführungsbeispiel beträgt der zweite Anstellwinkel κ₂ 0° (Null Grad). Das bedeutet, dass die zweite Schneidplatte 1' mit der im Eingriff stehenden Seitenkante parallel zur Mittelachse M, hier gleichbedeutend parallel zur Vorschubrichtung, angeordnet ist.

Wie auch schon beim vorherigen Ausführungsbeispiel ist auch hier der Schlichtschneidenabschnitt 3 in einen Hauptschneidenabschnitt 331 und einen Nebenschneidenabschnitt 332 unterteilt. Der Hauptschneidenabschnitt 331 und der Nebenschneidenabschnitt 332 sind miteinander verbunden, unterscheiden sich aber dadurch, dass der Hauptschneidenabschnitt 331 gegenüber dem Nebenschneidenabschnitt 332 einen in Richtung Plattenmitte abgewinkelten und insbesondere gekrümmten Verlauf zeigt.

Der Hauptschneidenabschnitt 331 übernimmt durch diese Ausgestaltung die Spanabnahme entsprechend der zweiten Spantiefe ap2, während der gerade und parallel zur Mittelachse M verlaufende Nebenschneidenabschnitt 332 für eine Glättung der Werkstückoberfläche sorgt.

Zusätzlich zum gegenüber dem Nebenschneidenabschnitt 332 abgewinkelten Verlauf des Hauptschneidenabschnitts 331 ist an diesem vorgesehen, dass sich die Spanleitstruktur 31 weiter in Richtung Plattenmitte erstreckt als die Spanleitstruktur 31 im Bereich des Nebenschneidenabschnitts 332. Damit wird dem Umstand Rechnung getragen, dass der eigentliche Materialabtrag an der zweiten Schneidplatte 1' im Bereich des Hauptschneidenabschnitts 331 stattfindet. Zusätzlich bevorzugt kann vorgesehen sein, dass innerhalb der dem Hauptschneidenabschnitt 331 zugeordneten Spanleitstruktur 31 Erhebungen 311 zur Spanformung ausgebildet sind. Die Erhebungen 311 sind insbesondere kalottenförmig ausgebildet.

Vorteilhaft und im vorliegenden Ausführungsbeispiel gezeigt ist ein gekrümmter Verlauf des Schruppschneidenabschnitts 2. Bevorzugt ist der Verlauf durchgehend konvex.

Vorliegend weisen die Schruppschneidenabschnitte 2 eine Krümmung entlang eines Krümmungskreises KK auf. Alternativ könnte der

Schruppschneidenabschnitt 2 einen von einem Kreisbogen abweichenden gekrümmten Verlauf aufweisen.

Ein die Krümmung des Schruppschneidenabschnitts 2 beschreibender Krümmungskreises KK weist in diesem Ausführungsbeispiel einen größeren Durchmesser auf, als es der Längsausstreckung der Schneidplatte 1, 1' entspricht.

Damit werden vorteilhaft sanfte Zerspanungsverhältnisse geschaffen, wie sie mit sonst zum Schruppen üblichen Rundplatten nur durch große Durchmesser von Rundplatten erzielt werden können.

Der gekrümmte Verlauf kann zu einer ausgangsseitigen Ecke 82 hin als gerader Abschnitt auslaufen.

Ein gekrümmter Verlauf des Schruppschneidenabschnitts 2 führt zu geringeren Schnittkräften und zu geringerem Verschleiß im Vergleich zu einem geraden Verlauf des Schruppschneidenabschnitts 2.

Insbesondere erfolgt die Anstellung der voranstehenden Schneidplatte 1 derart, dass die Krümmung des Schruppschneidenabschnitts 2 tangential zur erzeugten Werkstückoberfläche einläuft. Damit wird ein besonders sanfter Verlauf einer Spanabnahme erreicht.

Bevorzugt ist vorgesehen, dass die dem Schruppschneidenabschnitt 2 zugeordnete Spanleitstruktur 21 bezüglich einer Halbierenden LS entlang der Längserstreckung der Schneidplatte 1, 1' asymmetrisch ausgebildet ist. Insbesondere ist die Spanleitstruktur 21 asymmetrisch ausgebildet in dem Sinne, dass ein bezüglich der Halbierenden LS eingangsseitig liegender Flächenanteil der Spanleitstruktur 21 größer ist als ein bezüglich der Halbierenden LS ausgangsseitig liegender Flächenanteil der Spanleitstruktur 21.

Damit wird vorteilhaft erreicht, dass der eingangsseitigen Spanabnahme ein größerer Flächenanteil der Spanleitstruktur 21 zukommt.

Alternativ oder zusätzlich kann vorgesehen sein, dass die Asymmetrie der Spanleitstruktur 21 so beschaffen ist, dass eine mittlere laterale Erstreckung der Spanleitstruktur 21, das heißt eine mittlere Abmessung quer zur Halbierenden LS, bezüglich der Halbierenden LS eingangsseitig größer ist als bezüglich der Halbierenden LS ausgangsseitig.

Die Verhältnisse werden vorliegend für einen hier gezeigten Drehsinn entlang einer Linksspirale in einer Vorschubrichtung diskutiert. Es versteht sich, dass bei einer umgekehrten Bearbeitungsrichtung die Anordnung der Schneidenabschnitte entsprechend gespiegelt ausgeführt würde.

Vorteilhaft an einer Beabstandung der Schruppschneidenabschnitte 2 und der Schlichtschneidenabschnitte 3 durch einen schneidkantenfreien Abschnitt 4 ist, dass sich die Deckflächen 51, 52 an den schneidkantenfreien Abschnitten 4 bis an den Rand der Schneidplatten 1, 1' erstrecken. Wird eine Schneidplatte 1, 1' gewendet, sodass eine Deckfläche 51, 52 zur Auflage in einer Werkzeugaufnahme 6 kommt, kann die Schneidplatte 1, 1' mechanisch vorteilhaft bis an den Rand der Schneidplatte 1, 1' abgestützt werden. "Schneidkantenfrei" bedeutet im Zusammenhang mit der vorliegenden Anmeldung insbesondere, dass die Seitenkante der Schneidplatte 1, 1' entlang eines Abschnitts 4 nicht als Schneidkante ausgebildet ist. Das heißt, entlang des schneidkantenfreien Abschnitts 4 weist die Seitenkante der Schneidplatte 1, 1' insbesondere keine Fase auf und / oder es ist der Seitenkante im betreffenden Bereich keine Spanleitstruktur zugeordnet.

Figur 4 zeigt einen Ausschnitt der Schneidplatte 1 aus Figur 3.

Dabei sind die Verhältnisse der Spanleitstruktur 21 näher erkennbar.

Die Spanleitstruktur 21 weist eine Fläche auf, die von der Kontur 22 der Spanleitstruktur 21 und dem Schruppschneidenabschnitt 2 begrenzt wird.

Es lassen sich zwei Teilflächen definieren: eine erste Teilfläche liegt eingangsseitig bezüglich der Halbierenden LS, eine zweite Teilfläche liegt ausgangsseitig bezüglich der Halbierenden LS.

Wie bereits ausgeführt, ist die Spanleitstruktur 21 bevorzugt asymmetrisch ausgeführt, derart, dass die erste Teilfläche größer ist als die zweite Teilfläche, insbesondere um wenigstens 10% größer ist.

Ferner kann zu den Teilflächen eine laterale Erstreckung S_{Li} angegeben werden, welche eine Breite einer Teilfläche normal zur Halbierenden LS und zwischen der Halbierenden LS und der Kontur 22 der Spanleitstruktur 21 angibt. Bevorzugt ist eine mittlere laterale Erstreckung S_{L1} der ersten Teilfläche größer als eine mittlere laterale Erstreckung S_{L2} der zweiten Teilfläche.

In der Figur herausgestellt ist auch eine Tiefenerstreckung L_{T1} der Spanleitstruktur 21 zur Erläuterung des Maßes einer Tiefenerstreckung einer Spanleitstruktur. Eine Tiefenerstreckung L_{Ti} gibt an, wie weit sich die Spanleitstruktur 21 zwischen der Schneidkante, hier dem Schruppschneidenabschnitt 2, und der Kontur 22 der Spanleitstruktur 21 in Richtung einer Plattenmitte erstreckt.

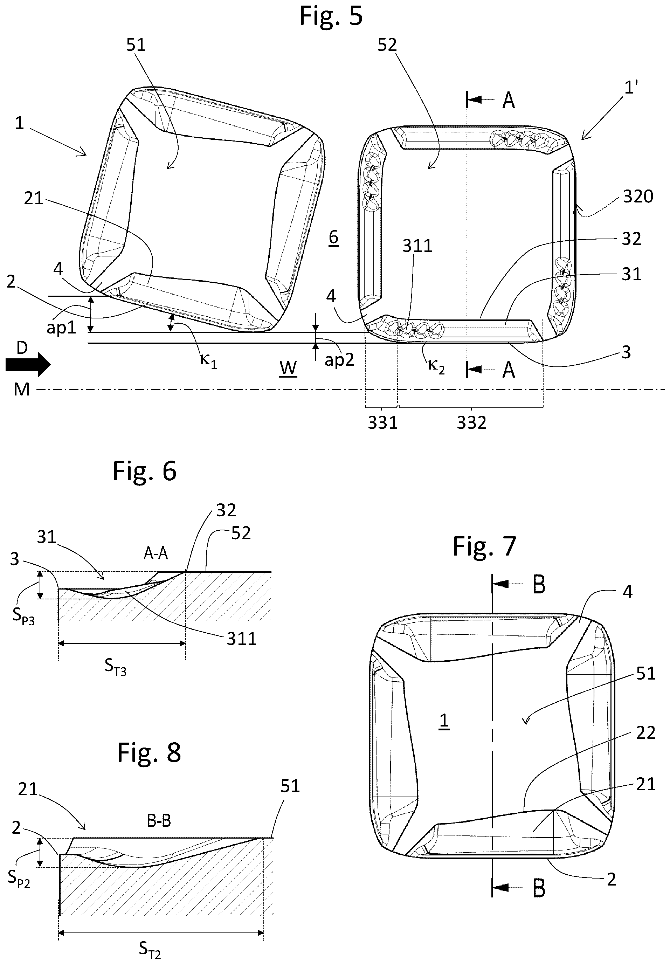

Figur 5 zeigt eine erfindungsgemäße Anordnung in einem weiteren Ausführungsbeispiel, anhand dessen das erfindungsgemäße Verfahren und erfindungsgemäße Schneidplatten näher erläutert werden sollen.

Die Werkzeugaufnahme 6 und das Werkstück W sind nur angedeutet.

Die Schneidplatten 1, 1' sind in dem Ausführungsbeispiel verrundet quadratisch ausgebildet.

Die voranstehende, das heißt die zuerst in einen Eingriff tretende Schneidplatte 1 ist mit einem ersten Anstellwinkel κ1 angestellt, der in dem gezeigten Beispiel 15° beträgt.

Die bezüglich der Bearbeitungsrichtung D voranstehende Schneidplatte 1 (in der Darstellung links) ist so zugestellt, dass die erste Schneidplatte 1 mit dem Schruppschneidenabschnitt 2 mit einer maximalen ersten Spantiefe ap1 im Eingriff mit dem Werkstück W steht.

Bei einem ersten Anstellwinkel κ1 von 15° wird bei einem Platteninkreisdurchmesser von beispielsweise 32 mm eine maximale erste Spantiefe ap1 von 5 mm erreicht.

Stellt man die gleiche Platte steiler an, beispielsweise mit einem ersten Anstellwinkel κ1 von 20°, wird eine maximale erste Spantiefe ap1 von 6 mm erreicht.

Stellt man die gleiche Platte mit einem ersten Anstellwinkel κ1 von 25° an , wird eine maximale erste Spantiefe ap1 von 8,5 mm erreicht.

Diese Zahlenbeispiele zeigen, dass durch Variation des Anstellwinkels der voranstehenden Platte die Spantiefen festgelegt werden können. Damit kann vorteilhaft eine Zerspanbarkeit des zu zerspanenden Werkstoffs berücksichtigt werden. Hochlegierte / hochfeste Werkstoffe können beispielsweise mit einem kleineren Anstellwinkel (beispielsweise 15°) und entsprechend geringerer Spantiefe bearbeitet werden.

Die voranstehende Schneidplatte 1 weist an ihrer Deckfläche 51 vier Schruppschneidenabschnitte 2 mit dazugehörigen Spanleitstrukturen 21 auf. Die Schruppschneidenabschnitte 2 sind jeweils durch einen schneidkantenfreien Abschnitt 4 beabstandet. Entlang der Seitenkante der Schneidplatte 1 ist im Bereich des schneidkantenfreien Abschnitts 4 insbesondere keine definierte Schneidkante und/ oder eine Spanleitstruktur ausgebildet. Eine Kante gilt dann als "definierte" Schneidkante, wenn eine Fase und / oder eine Verrundung daran ausgebildet ist.

Insbesondere erstreckt sich die Deckfläche 51 im Bereich des schneidkantenfreien Abschnitts 4 bis an den Rand der Schneidplatte 1, wodurch in einer gewendeten Lage der Schneidplatte 1 eine Abstützung bis an den Rand möglich ist.

Die bezüglich der Bearbeitungsrichtung D nachstehende Schneidplatte 1' weist an ihrer Deckfläche 52 vier Schlichtschneidenabschnitte 3 mit dazugehörigen Spanleitstrukturen 31 auf.

An den Schlichtschneidenabschnitten 3 ist bevorzugt freiflächenseitig eine Stützfase 320 ausgebildet. Stützfasen stabilisieren den Schneidkeil und verbessern die Eignung einer Schneidkante zum Glätten.

Die Schlichtschneidenabschnitte 3 sind jeweils durch einen schneidkantenfreien Abschnitt 4 beabstandet. Insbesondere erstreckt sich die Deckfläche 52 im Bereich des schneidkantenfreien Abschnitts 4 bis an den Rand der Schneidplatte 1', wodurch in einer gewendeten Lage der Schneidplatte 1' eine Abstützung bis an den Rand möglich ist.

Die nachstehende Schneidplatte 1' ist so zugestellt, dass die Schneidplatte 1' mit einem an einer Seitenkante ausgebildeten Schlichtschneidenabschnitt 3 mit einer maximalen zweiten Spantiefe ap2 im Eingriff mit dem Werkstück W steht. Die Schneidplatte 1' ist mit einem vom ersten Anstellwinkel κ₁ verschiedenen zweiten Anstellwinkel κ₂ angestellt. Der zweite Anstellwinkel κ₂ ist kleiner als der erste Anstellwinkel κ₁. Im vorliegenden Ausführungsbeispiel beträgt der zweite Anstellwinkel κ₂ 0° (Null Grad). Das bedeutet, dass der die im Eingriff stehende Seitenkante parallel zur Mittelachse M verläuft.

Die Schneidplatten 1, 1' sind jeweils so zugestellt, dass die schneidkantenfreien Abschnitte 4 nicht in Eingriff treten.

Im vorliegenden Ausführungsbeispiel ist also jene Ausprägung des Verfahrens und der Schneidplatten 1,1' gezeigt, in welchem sich die Deckflächen 51, 52 der aktuell in einem Eingriff befindlichen Seiten der Schneidplatten 1;1' unterscheiden.

Bevorzugt ist in diesem Zusammenhang vorgesehen, dass an jeder Schneidplatte 1;1' eine Seite als "Schruppseite", das heißt ausschließlich mit Schruppschneidenabschnitten 2, und die andere Seite als "Schlichtseite" mit ausschließlich Schlichtschneidenabschnitten 3 ausgebildet ist.

In anderen Worten sind die Schneidplatten 1;1' zweiseitig mit unterschiedlichen Ober- und Unterseiten auf. Auf einer Seite sind ausschließlich Schruppschneidenabschnitte 2, auf der anderen Seite sind ausschließlich Schlichtschneidenabschnitte 3 gebildet.

Vorliegend ist der Fall verwirklicht, dass Schruppschneidenabschnitte 2 und Schlichtschneidenabschnitte 3 räumlich voneinander getrennt sind, als sie sich auf verschiedenen Seiten der Schneidplatten 1, 1' befinden.

Darüber hinaus sind jeweils die Schruppschneidenabschnitte 2 und die Schlichtschneidenabschnitte 3 voneinander räumlich getrennt, als dazwischen jeweils ein schneidkantenfreier Abschnitt 4 besteht.

Der Schlichtschneidenabschnitt 3 ist wie auch schon bei den zuvor diskutierten Ausführungsbeispielen auch hier in einen Hauptschneidenabschnitt 331 und einen Nebenschneidenabschnitt 332 unterteilt. Der Hauptschneidenabschnitt 331 und der Nebenschneidenabschnitt 332 sind miteinander verbunden, unterscheiden sich aber dadurch, dass der Hauptschneidenabschnitt 331 gegenüber dem Nebenschneidenabschnitt 332 einen in Richtung Plattenmitte abgewinkelten und insbesondere gekrümmten Verlauf zeigt.

Der Hauptschneidenabschnitt 331 übernimmt durch diese Ausgestaltung die Spanabnahme entsprechend der zweiten Spantiefe ap2, während der gerade und parallel zur Mittelachse M verlaufende Nebenschneidenabschnitt 332 für eine Glättung der Werkstückoberfläche sorgt. Insbesondere im Bereich des Hauptschneidenabschnitts 331 sind in der Spanleitstruktur 31 des Schlichtschneidenabschnitts 3 Erhebungen 311 zur Spanformung geformt. Das ist insbesondere vorteilhaft, da die eigentliche Spanabnahme durch den Schlichtschneidenabschnitt 3 im Bereich des Hauptschneidenabschnitts 331 erfolgt.

Figur 6 zeigt einen ausschnittsweisen Querschnitt der Schneidplatte 1' (der nachstehenden Schneidplatte) gemäß Schnitt A-A aus Figur 5. Es betrifft also jene Seite einer Schneidplatte 1,1', an welcher ausschließlich Schlichtschneidenabschnitte 3 ausgebildet sind. Der Schnitt A-A erfolgt im Bereich des Nebenschneidenabschnitts 332.

Eine Tiefenerstreckung S_{T3} der dem Schlichtschneidenabschnitt 3 zugeordneten Spanleitstruktur 31 beträgt vorliegend rund 20% der Strecke vom Schlichtschneidenabschnitt 3 bis zu einer Plattenmitte. Bevorzugt beträgt die Tiefenerstreckung der Spanleitstruktur 31 zwischen 5% und 30% der Strecke vom Schlichtschneidenabschnitt 3 bis zu der Plattenmitte. Insbesondere gilt dies für wenigstens 50%, bevorzugt wenigstens 70%, weiter bevorzugt wenigstens 80% einer Länge der Kontur 32 der Spanleitstruktur 31 des Schlichtschneidenabschnitts 3. Damit wird zum Ausdruck gebracht, dass die Spanleitstruktur 31 des Schlichtschneidenabschnitts 3 schmal ausgebildet ist, wodurch in einer gewendeten Lage der Schneidplatte 1' eine große Auflagefläche zur Verfügung steht.

Die Spanleitstruktur 31 ist in die Deckfläche 52 eingeformt und zumindest abschnittweise gegenüber der Deckfläche 52 abgesenkt.

An der tiefsten Stelle der Spanleitstruktur 31 im vorliegenden Schnitt ist eine Profiltiefe S_{P3} eingetragen.

Eine maximale Profiltiefe der Spanleitstruktur 31 beträgt insbesondere zwischen 0,1 mm und 0,7 mm.

Die Spanleitstruktur 31 des Schlichtschneidenabschnitts 3 weist bevorzugt Erhebungen 311 zur Spanformung auf. Die Erhebungen 311 sind insbesondere kalottenförmig ausgebildet. Die Erhebungen 311 zur Spanformung sind insbesondere eingangsseitig, also im Bereich des Hauptschneidenabschnitts 331 ausgebildet.

Im Bereich des Nebenschneidenabschnitts 332, und daran insbesondere ausgangsseitig, sind bevorzugt keine Erhebungen 311 zur Spanformung vorhanden.

Insbesondere ist der Schlichtschneidenabschnitt 3 zumindest abschnittsweise, insbesondere entlang seiner gesamten Erstreckung gegenüber dem Niveau der Deckfläche 52 abgesenkt.

Figur 7 zeigt eine Draufsicht auf die voranstehende Schneidplatte 1 mit Angabe des Schnitts B-B. Es betrifft also jene Seite der zweiseitigen Schneidplatte 1, 1', an welcher ausschließlich Schruppschneidenabschnitte 2 ausgebildet sind.

Figur 8 zeigt einen ausschnittsweisen Querschnitt der Schneidplatte 1 gemäß Schnitt B-B aus Figur 7.

Die dem Schruppschneidenabschnitt 2 zugeordnete Spanleitstruktur 21 weist an der Schnittposition eine Tiefenerstreckung S₁₂ auf.

Eine größte Tiefenerstreckung S_{T2max} der Spanleitstruktur 21 ist dabei der größte Normalabstand von dem Schruppschneidenabschnitt 2 zur Kontur 22 der Spanleitstruktur 21.

Eine größte Tiefenerstreckung S_{T2max} der Spanleitstruktur 21 beträgt insbesondere zwischen 15% und 50% des Abstands zwischen dem Schruppschneidenabschnitt 2 zur Plattenmitte.

Damit kommt zum Ausdruck, dass die dem Schruppschneidenabschnitt 2 zugeordnete Spanleitstruktur 21 sich bevorzugt weit in Richtung Plattenmitte erstreckt.

Die Spanleitstruktur 21 ist in die Deckfläche 51 eingeformt und zumindest abschnittweise gegenüber der Deckfläche 51 abgesenkt.

An der im vorliegenden Schnitt tiefsten Stelle der Spanleitstruktur 21 ist eine Profiltiefe S_{P2} eingetragen. Die Profiltiefe S_{P2} beträgt bevorzugt zwischen 0,2 mm und 2,5 mm. An der gezeigten Schnittposition B-B beträgt die Profiltiefe S_{P2} rund 0,8 mm.

Der Schruppschneidenabschnitt 2 ist bevorzugt zumindest abschnittsweise, insbesondere entlang seiner gesamten Erstreckung gegenüber dem Niveau der Deckfläche 51 abgesenkt.

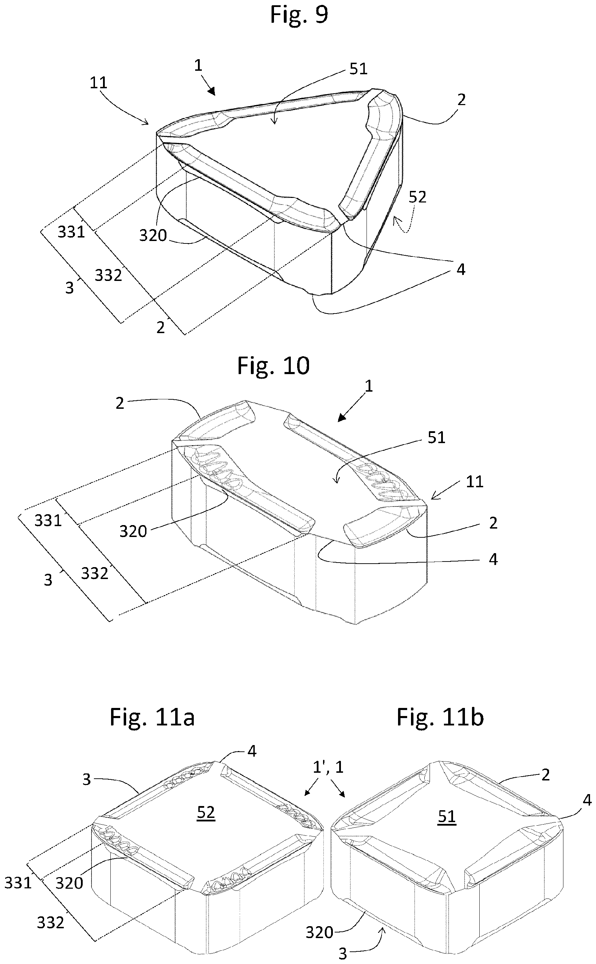

Figur 9 zeigt schematisch eine Schneidplatte 1 aus Figur 2 in einer perspektivischen Ansicht.

An einem Rand 11 der Schneidplatte 1 sind abschnittsweise Schneidkanten in Form der Schruppschneidenabschnitte 2 und der Schlichtschneidenabschnitte 3 ausgebildet. Bezüglich der Anordnung der Schneidenabschnitte ist die Schneidplatte 1 für einen Gebrauch nach der bisher diskutierten Bearbeitungsrichtung ausgestaltet. Die Gliederung des Schlichtschneidenabschnitts 3 in einen Hauptschneidenabschnitt 331 und einen Nebenschneidenabschnitts 332 ist folglich derart, dass der Hauptschneidenabschnitt 331 im Einsatz eingangsseitig und der Nebenschneidenabschnitt 332 ausgangsseitig liegt.

Entlang der Schlichtschneidenabschnitte 3 und dabei insbesondere entlang des jeweiligen Nebenschneidenabschnitts 332 ist bevorzugt eine Stützfase 320 ausgebildet. In dem gezeigten Ausführungsbeispiel erstreckt sich die Stützfase 320 beidseitig etwas über den Nebenschneidenabschnitt 332 hinweg, also eingangsseitig in den Hauptschneidenabschnitt 331 und ausgangsseitig in den Schruppschneidenabschnitt 2. Bevorzugt ist es, dass sich die Stützfase 320 nur entlang des Nebenschneidenabschnitts 332 erstreckt oder dass sich die Stützfase 320 zu einem Teil auch in den Hauptschneidenabschnitt 331 erstreckt. Bevorzugt endet die Stützfase 320 vor dem Schruppschneidenabschnitt 2. Der Schruppschneidenabschnitt 2 ist also bevorzugt frei von einer Stützfase 320.

Zwischen einem ausgangsseitigen Ende des Schruppschneidenabschnitts 2 und einem Schlichtschneidenabschnitt 3 ist jeweils ein schneidkantenfreier Abschnitt 4 vorgesehen, bei dem sich die Deckfläche 51 bis an den Rand 11 der Schneidplatte 1 erstreckt. Da die Schneidplatte 1 - wie bevorzugt vorgesehen - doppelseitig als Wendeschneidplatte ausgeführt ist, sind die schneidkantenfreien Abschnitte 4 auch an der bezüglich der Darstellung unteren Seite der Schneidplatte 1 als Vorsprünge erkennbar, da sich im Bereich der schneidkantenfreien Abschnitte 4 das Niveau der (hier nicht sichtbaren) unteren Deckfläche 52 bis an den Rand der Schneidplatte 1 erstreckt.

Figur 10 zeigt eine Schneidplatte 1 aus Figur 3 in einer perspektivischen Ansicht.

Zwischen den Schruppschneidenabschnitten 2 und den Schlichtschneidenabschnitten 3 sind jeweils schneidkantenfreie Abschnitte 4 vorgesehen, bei denen sich die Deckfläche 51 bis an den Rand 11 der Schneidplatte 1 erstreckt.

Entlang eines Nebenschneidenabschnitts 332 eines Schlichtschneidenabschnitts 3 ist bevorzugt eine Stützfase 320 ausgebildet. Eine Stützfase ist eine freiflächenseitige Fase. Die Stützfase 320 sorgt für eine verbesserte Stabilität des Schneidkeils im Bereich des für eine Glättung sorgenden Nebenschneidenabschnitts 332.

Figuren 11a und 11b zeigen Schneidplatten 1, 1' aus Figur 5 in einer perspektivischen Ansicht. Wie bereits diskutiert, ist die Schneidplatte 1, 1' mit quadratischer Grundform bevorzugt als zweiseitige Schneidplatte ausgebildet, bei der sich Ober- und Unterseite unterscheiden.

In Figur 11a ist die Schneidplatte 1, 1' mit jener Deckfläche 52 als Oberseite ersichtlich, an welcher Deckfläche 52 ausschließlich Schlichtschneidenabschnitte 3 ausgebildet sind. Vorliegend sind vier Schlichtschneidenabschnitte 3 vorhanden.

Die Schlichtschneidenabschnitte 3 sind jeweils durch einen schneidkantenfreien Abschnitt 4 beabstandet.

Entlang eines Nebenschneidenabschnitts 332 eines Schlichtschneidenabschnitts 3 ist bevorzugt eine Stützfase 320 ausgebildet. Die Stützfase 320 sorgt für eine verbesserte Stabilität des Schneidkeils im Bereich des für eine Glättung sorgenden Nebenschneidenabschnitts 332.

In Figur 11b zeigt die Schneidplatte 1, 1' mit jener Deckfläche 51 als in der Darstellung obenliegend, an welcher Deckfläche 51 ausschließlich Schruppschneidenabschnitte 2 ausgebildet sind.

Die Schruppschneidenabschnitte 2 sind jeweils durch einen schneidkantenfreien Abschnitt 4 beabstandet und dadurch räumlich getrennt. Ersichtlich in der Zeichnung ist die Stützfase 320 der auf der anderen Plattenseite liegenden Schlichtschneidenabschnitte 3.

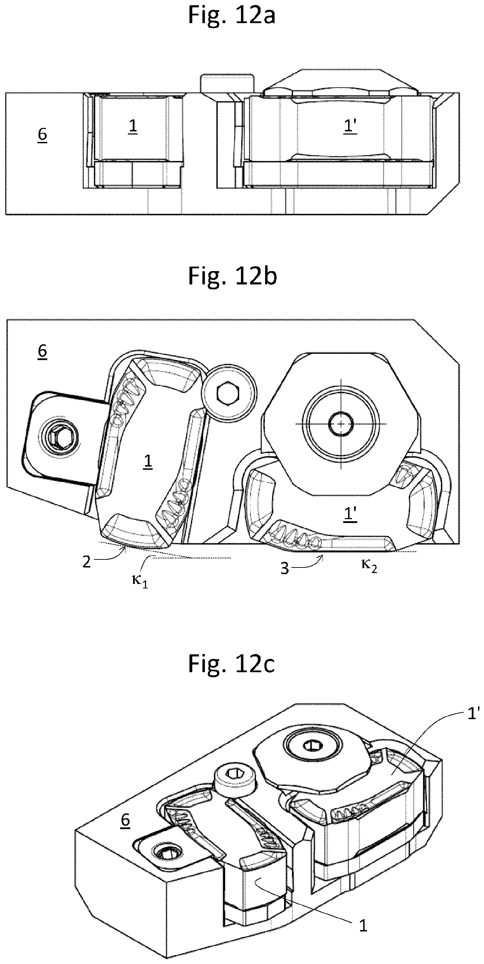

Figuren 12a bis 12c zeigen eine als Kassette ausgeführte Werkzeugaufnahme 6 mit darin festgelegten Schneidplatten 1, 1' in verschiedenen Ansichten.

Die in dem Beispiel gezeigten Schneidplatten 1, 1' entsprechen jenen von Figuren 3, 4 und 10.

Figur 12a zeigt die Werkzeugaufnahme 6 in einem Aufriss, dass heißt in einer Vorderansicht. Figur 12b zeigt die Werkzeugaufnahme 6 in einer Draufsicht.

Figur 12c zeigt die Werkzeugaufnahme 6 in einer perspektivischen Ansicht.

Die Werkzeugaufnahme 6 ist dazu ausgestaltet, eine erste Schneidplatte 1 derart orientiert aufzunehmen und festzulegen, dass die erste, für ein Schruppen vorgesehene Schneidplatte 1 mit einem ersten Anstellwinkel κ1 angestellt ist und der Schruppschneidenabschnitt 2 in einer Bearbeitungsposition steht.

Die Werkzeugaufnahme 6 ist ferner dazu ausgestaltet, eine zweite Schneidplatte 1' derart orientiert aufzunehmen und festzulegen, dass die zweite, für ein Schlichten vorgesehene Schneidplatte 1' mit einem vom ersten Anstellwinkel κ1 verschiedenen zweiten Anstellwinkel κ2 angestellt ist, welcher kleiner ist als der erste Anstellwinkel und der Schlichtschneidenabschnitt 3 in einer Bearbeitungsposition steht. Insbesondere ist durch die Ausgestaltung der Werkzeugaufnahme 6 auch ein Verhältnis der Spantiefen der ersten Schneidplatte 1 und der zweiten Schneidplatte 1' vorgebbar.

Der zweite Anstellwinkel κ2 beträgt hier Null Grad.

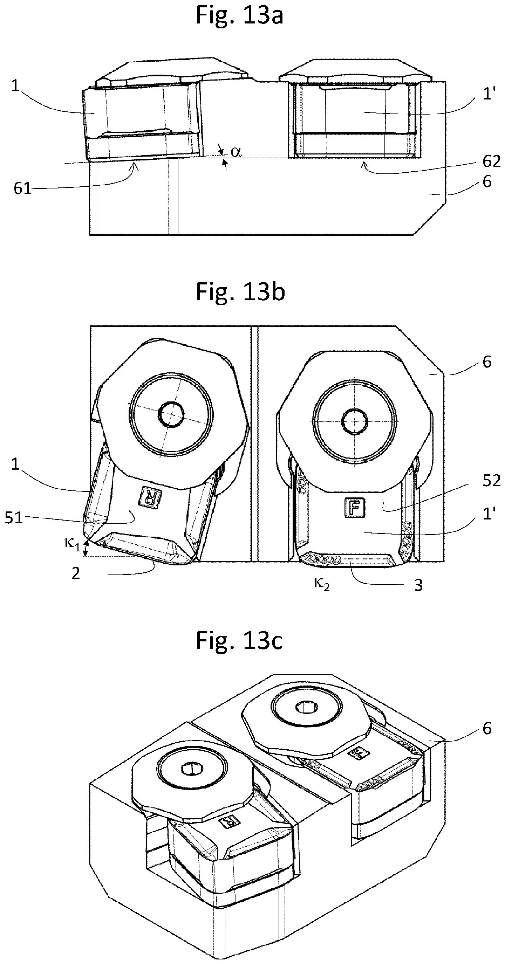

Figuren 13a bis 13c zeigen eine als Kassette ausgeführte Werkzeugaufnahme 6 mit darin festgelegten Schneidplatten 1, 1' in verschiedenen Ansichten. Figur 13a zeigt die Werkzeugaufnahme 6 in einem Aufriss. Figur 13b zeigt die Werkzeugaufnahme 6 in einer Draufsicht. Figur 13c zeigt die Werkzeugaufnahme 6 in einer perspektivischen Ansicht.

Hier gezeigt ist eine Werkzeugaufnahme 6, die zur Aufnahme von zweiseitigen Schneidplatten 1, 1' nach dem Beispiel von Figur 5 ausgeführt ist. Bei diesen Schneidplatten 1, 1' sind Ober- und Unterseite verschieden. An einer ersten Deckfläche 51 sind ausschließlich Schruppschneidenabschnitte 2 vorhanden, auf der zweiten Deckfläche 52 bestehen ausschließlich Schlichtschneidenabschnitte 3.

Die Werkzeugaufnahme 6 ist dazu ausgestaltet, eine erste Schneidplatte 1 derart orientiert aufzunehmen und festzulegen, dass die erste, für ein Schruppen vorgesehene Schneidplatte 1 mit einem ersten Anstellwinkel κ1 angestellt ist und der Schruppschneidenabschnitt 2 in einer Bearbeitungsposition steht. Die Werkzeugaufnahme 6 ist ferner dazu ausgestaltet, eine zweite Schneidplatte 1' derart orientiert aufzunehmen und festzulegen, dass die zweite, für ein Schlichten vorgesehene Schneidplatte 1' mit einem vom ersten Anstellwinkel κ1 verschiedenen zweiten Anstellwinkel κ2 angestellt ist, welcher kleiner ist als der erste Anstellwinkel und der Schlichtschneidenabschnitt 3 in einer Bearbeitungsposition steht. Insbesondere ist durch die Ausgestaltung der Werkzeugaufnahme 6 auch ein Verhältnis der Spantiefen der ersten Schneidplatte 1 und der zweiten Schneidplatte 1' vorgebbar. Der zweite Anstellwinkel κ2 beträgt hier Null Grad.

Bevorzugt vorgesehen und anhand Figur 13a ersichtlich, ist ein Plattensitz 61 der für ein Schruppen vorgesehene Schneidplatte 1 mit einem Kipp-Winkel α gegenüber einem Plattensitz 62 der für ein Schlichten vorgesehene Schneidplatte 1' ausgebildet. Der Kipp-Winkel α beträgt vorliegend rund 3°. Bevorzugt liegt der Kipp-Winkel α zwischen 0° und 6°. Vorteile einer Verkippung sind eine verbesserte Freistellung der Schneidplatte und ein weicherer, schälender Schnitt.

Wie aus Figur 13b ersichtlich, sind die Schneidplatten 1, 1' bevorzugt mit einer Markierung versehen, um die Ober- und Unterseite verwechslungssicher zu unterscheiden. In die Deckfläche 51 mit Schruppschneidenabschnitten 2 ist hier der Buchstabe "R" eingeprägt (für engl. *rough*, Grobbearbeitung). In die Deckfläche 52 mit Schlichtschneidenabschnitten 3 ist der Buchstabe "F" (für engl. *fine*, Feinbearbeitung) eingeprägt.

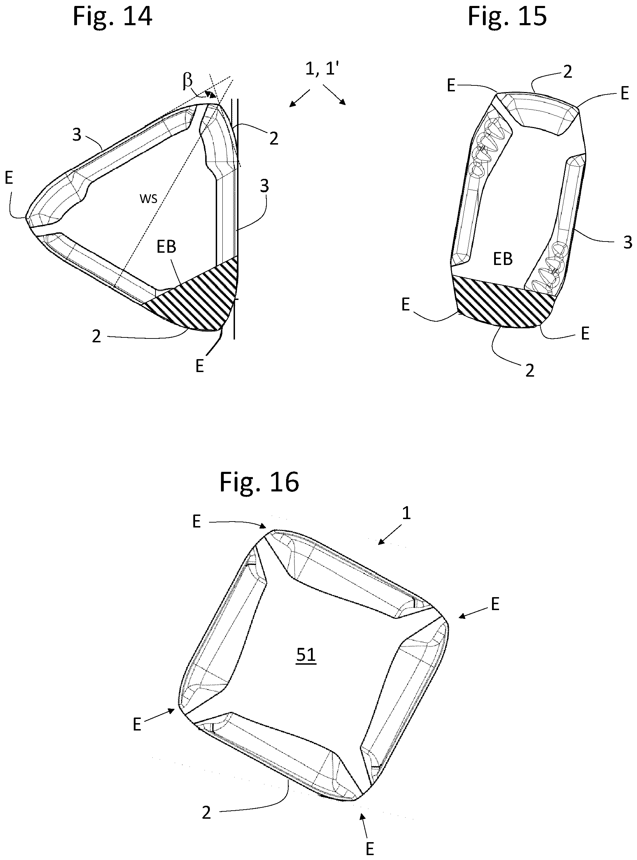

Figur 14 zeigt eine Schneidplatte 1, 1' mit dreieckiger Grundform (eine sogenannte N-Platte), wie sie im Ausführungsbeispiel nach Figur 2 diskutiert wurde. Hervorgehoben in der vorliegenden Zeichnung ist ein Eckenbereich EB, welcher sich ausgehend von einer Ecke E der Schneidplatte 1, 1' in Richtung einer Plattenmitte erstreckt. Als Plattenmitte wird insbesondere ein Schwerpunkt der Schneidplatte aufgefasst. Die Zeichnung dient zur Illustration der Weiterbildung, wonach die Schruppschneidenabschnitte 2 in einem Eckenbereich EB der Schneidplatte 1, 1' ausgebildet sind.

Die Schlichtschneidenabschnitte 3 sind, davon unterschieden, insbesondere entlang einer Seitenkante der Schneidplatte ausgebildet.

Der Eckenbereich EB umfasst insbesondere jenen Flächenanteil der Schneidplatte 1, 1' in einer Draufsicht, der sich ausgehend von der betreffenden Ecke E in Richtung der Plattenmitte erstreckt und zwischen 10% bis 30% einer Gesamtfläche der Schneidplatte 1, 1' einnimmt. Damit wird zum Ausdruck gebracht, dass Schruppschneidenabschnitte 2 bevorzugt angrenzend an Ecken E der Schneidplatte 1, 1' liegend, wodurch bei entsprechender Anstellung der Schneidplatte 1, 1' lediglich ein Schruppschneidenabschnitt 2 in Eingriff tritt. So sind große Spantiefen erzielbar, ohne dass ein Schlichtschneidenabschnitt 3 in einen Eingriff tritt.

An der vorliegenden Plattenform kann ein Winkel β zwischen einem Schruppschneidenabschnitt 2 und einem Schlichtschneidenabschnitt 3 definiert werden als aufgespannt zwischen einer Parallelen zum geraden Verlauf des Schlichtschneidenabschnitts 3 und dem Schruppschneidenabschnitt 2, wobei die Orientierung des Schruppschneidenabschnitts 2 als Verbindung des der betrachteten Ecke E abgewandten Beginns des Schruppschneidenabschnitts 2 und der Ecke E angegeben wird. Der Winkel β zwischen einem Schruppschneidenabschnitt 2 und einem Schlichtschneidenabschnitt 3 beträgt vorliegend rund 78°.

Figur 15 zeigt eine Schneidplatte 1, 1', wie sie im Ausführungsbeispiel nach Figur 3 vorgestellt wurde. Die Zeichnung dient zur Illustration der Weiterbildung, wonach die Schruppschneidenabschnitte 2 in einem Eckenbereich EB der Schneidplatte 1, 1' ausgebildet sind. Es gilt sinngemäß das anhand Figur 14 erklärte.

Figur 16 zeigt eine zweiseitige Schneidplatte 1, 1', wie sie im Ausführungsbeispiel nach Figur 5 vorgestellt wurde.

Anders als bei der Schneidplatte mit dreieckiger Grundform nach Figur 2 und anders als bei der Schneidplatte mit L-Grundform nach Figur 3 sind hier an einer, der hier sichtbaren, Deckfläche 51 ausschließlich Schruppschneidenabschnitte 2 ausgebildet.

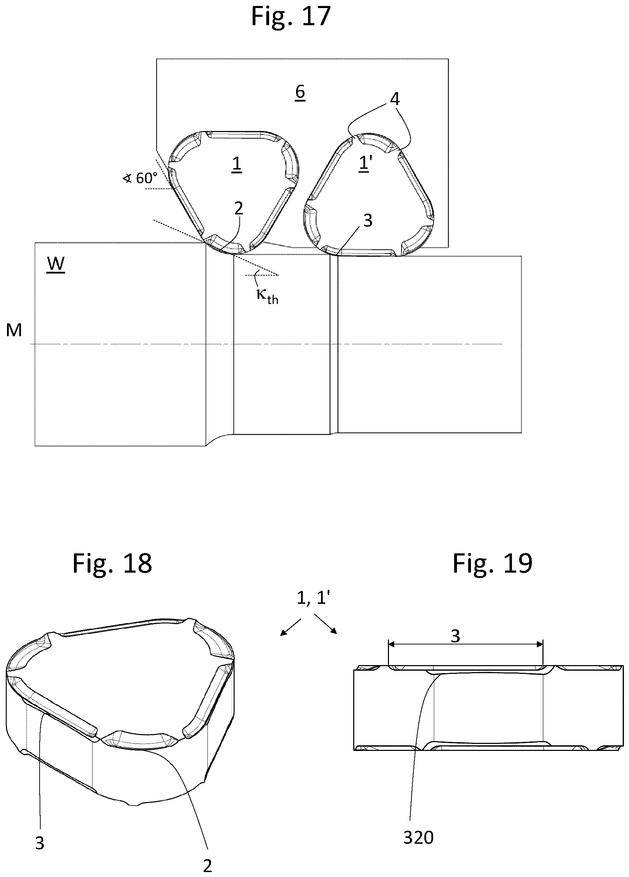

Figur 17 zeigt eine Anordnung von zwei Schneidplatten 1, 1' mit dreieckiger Grundgestalt (sogenannte N-Platten) in einem weiteren Ausführungsbeispiel. Die Schneidplatten 1, 1' sind gegeneinander um 180° verdreht angeordnet. Somit verlaufen die einander zugewandten Seitenkanten parallel, wodurch sich eine besonders kompakte Anordnung ergibt.

Ein theoretischer Anstellwinkel κₜₕ des Schruppschneidenabschnitts 2 beträgt vorliegend 24°.

Figur 18 zeigt eine Schneidplatte 1, 1' aus Figur 17 in einer perspektivischen Ansicht.

Figur 19 zeigt eine Schneidplatte 1, 1' aus Figur 17 in einer Seitenansicht.

Bei den Schneidplatten 1, 1' nach Figuren 17 bis 19 sind Schruppschneidenabschnitte 2 und Schlichtschneidenabschnitte 3 jeweils durch einen schneidkantenfreien Abschnitt 4 beabstandet und dadurch räumlich getrennt. Die Schneidplatte 1, 1' weisen zwei gleichartige Deckflächen auf, sind also doppelseitig in dem Sinne, dass sich eine Oberseite und eine Unterseite nicht unterscheiden.

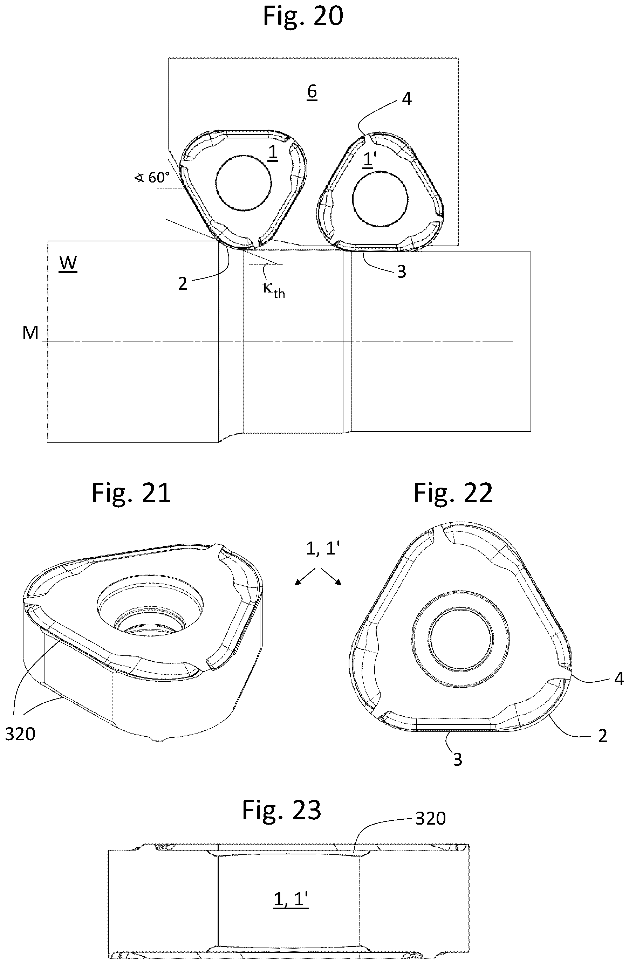

Figur 20 zeigt eine Anordnung von zwei Schneidplatten 1, 1' mit dreieckiger Grundgestalt (sogenannte N-Platten) in einem weiteren Ausführungsbeispiel.

In Abweichung von dem Ausführungsbeispiel von Figur 17 weisen die Schneidplatten 1, 1' schneidkantenfreie Abschnitte 4 lediglich zwischen einem auslaufseitigen Ende eines Schruppschneidenabschnitts 2 und einem Schlichtschneidenabschnitt 3 auf.

Auch in diesem Ausführungsbeispiel sind die Schneidplatten 1, 1' doppelseitig ausgeführt, das heißt, die Ober- und Unterseite sind gleich.

Figuren 21-23 zeigen die Schneidplatte 1, 1' dieses Ausführungsbeispiels in verschiedenen Ansichten.

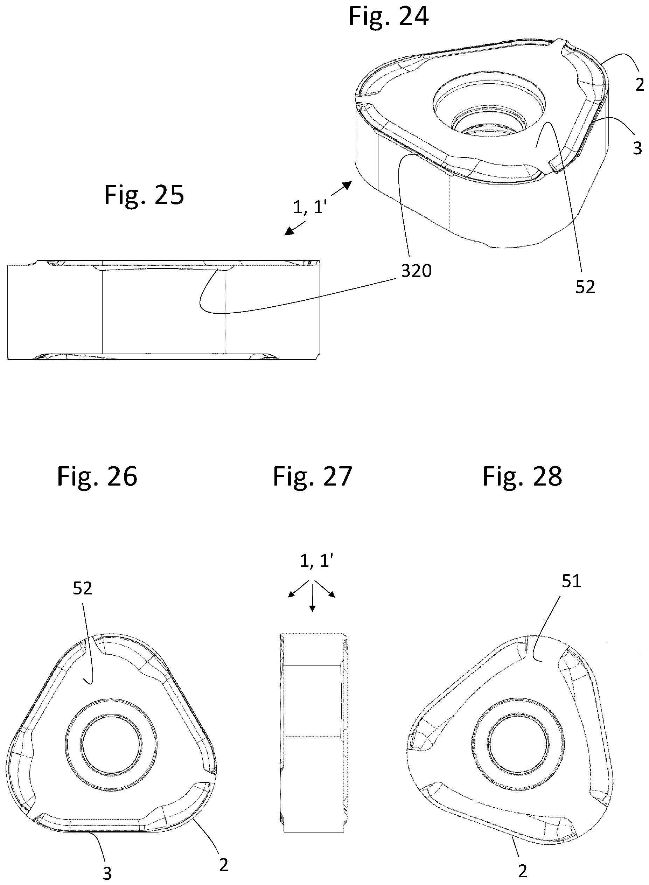

Figuren 24-28 zeigen verschiedene Ansichten einer Schneidplatte 1, 1' mit dreieckiger Grundgestalt (sogenannte N-Platte) nach einem weiteren Ausführungsbeispiel.

Hier ist der Fall realisiert, dass sich Ober- und Unterseite unterscheiden:
an der ersten Deckfläche 51 sind ausschließlich Schruppschneidenabschnitte 2 ausgebildet.

An der zweiten Deckfläche 52 sind Schlichtschneidenabschnitte 3 und Schruppschneidenabschnitte 2 ausgebildet. Damit ist die Möglichkeit geschaffen, die Schneidplatte zunächst mit der zweiten Deckfläche 52 zum Schruppen zu verwenden, wobei die Schneidplatte 1,1' dazu in einer Einbaulage wie in Figur 20 gezeigt als voranstehende Platte eingesetzt würde. Nach Verbrauch der Schruppschneidenabschnitte 2 an der zweiten Deckfläche 52 kann die Schneidplatte 1,1' in einer nachstehenden Position zum Schlichten mit den Schlichtschneidenabschnitten 3 verwendet werden.

Nach Aufbrauch der Schlichtschneidenabschnitte 3 kann die Schneidplatte 1,1' gewendet und mit den Schruppschneidenabschnitten 2 an der ersten Deckfläche 51 zum Schruppen verwendet werden. Die Anstellung der Schneidplatte 1,1' zur Verwendung der Schruppschneidenabschnitte 2 an der ersten Deckfläche 51 würde dann wie in Figur 28 angedeutet bei einem flacheren Anstellwinkel als in Figur 20 gezeigt - hier etwa 20° - erfolgen. Damit kann eine besonders gute Materialausnutzung erzielt werden, insbesondere deshalb, weil an einer Schneidplatte mehr von den einem besonders starken Verschleiß ausgesetzten Schruppschneidenabschnitten 2 vorhanden sind.

Entlang der Schlichtschneidenabschnitte 3 ist jeweils eine Stützfase 320 vorgesehen.

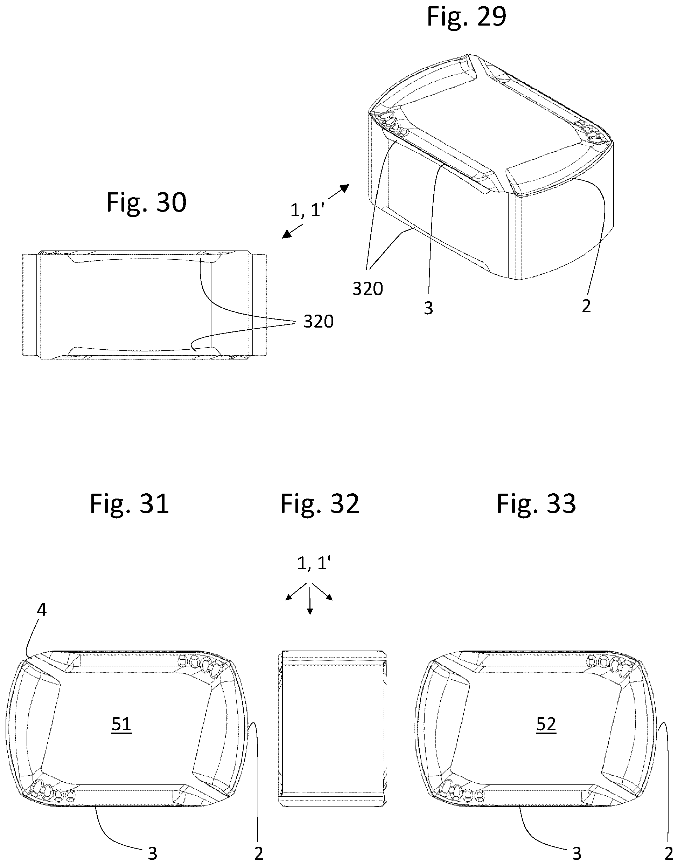

Figuren 29-33 zeigen verschiedene Ansichten einer L-Platte in einem weiteren Ausführungsbeispiel.

Die Schneidplatte 1, 1' ist gegenüber dem Ausführungsbeispiel nach Figur 3 deutlich gestaucht, also kürzer gebaut.

Dies erlaubt eine besonders kompakte Anordnung der Schneidplatte 1, 1' bei gleichzeitig ausreichender Länge der Schlichtschneidenabschnitte 3.

In diesem Ausführungsbeispiel ist ein auslaufendes Ende eines Schlichtschneidenabschnitts 3 über einen schneidkantenfreien Abschnitt 4 von einem Schruppschneidenabschnitt 2 beabstandet.

Ober- und Unterseite unterscheiden sich nicht.

Die anhand der Ausführungsbeispiele diskutierten Merkmale der Schruppschneidenabschnitte 2 und Schlichtschneidenabschnitte 3 gelten generell für Schneidplatten im Rahmen der vorliegenden Anmeldung.

## Patentansprüche

1. Verfahren zum Schäldrehen eines Werkstücks (W), wobei in einer Werkzeugaufnahme (6) wenigstens zwei gleiche Schneidplatten (1, 1') angeordnet sind, an welchen jeweils eine Mehrzahl von Schruppschneidenabschnitten (2) und jeweils eine Mehrzahl von davon verschiedenen Schlichtschneidenabschnitten (3) ausgebildet ist, wobei in einer Einbaulage die bezüglich einer Bearbeitungsrichtung voranstehende, für eine Schruppbearbeitung vorgesehene Schneidplatte (1) derart angestellt wird, dass sie nur mit einem Schruppschneidenabschnitt (2) im Eingriff steht und die nachstehende, für eine Schlichtbearbeitung vorgesehene Schneidplatte (1') derart angestellt wird, dass sie nur mit einem Schlichtschneidenabschnitt (3) im Eingriff steht.

2. Verfahren nach Anspruch 1, wobei die bezüglich einer Bearbeitungsrichtung voranstehende, für eine Schruppbearbeitung vorgesehene Schneidplatte (1) mit einem ersten Anstellwinkel (κ1) angestellt wird und die bezüglich der Bearbeitungsrichtung nachstehende Schneidplatte (1') mit einem vom ersten Anstellwinkel (κ1) verschiedenen zweiten Anstellwinkel (κ2) angestellt wird, wobei der erste Anstellwinkel (κ1) größer ist als der zweite Anstellwinkel (κ2).

3. Verfahren nach Anspruch 1 oder 2, wobei ein Schlichtschneidenabschnitt (3) einen Nebenschneidenabschnitt (332) und einen dazu in Richtung einer Plattenmitte abgewinkelt verlaufenden Hauptschneidenabschnitt (331) aufweist, wobei der Nebenschneidenabschnitt (332) im Wesentlichen parallel zu einer Mittelachse (M) des Werkstücks (W) angestellt wird und der Hauptschneidenabschnitt (331) so angestellt wird, dass dieser wenigstens 80% einer vom Schlichtschneidenabschnitt (3) abzutragenden zweiten Spantiefe (ap2) erfasst.

4. Verfahren nach wenigstens einem der Ansprüche 1 bis 3, wobei die Schneidplatten (1, 1') entweder
- jeweils zwei gleichartige Deckflächen (51, 52) aufweisen, wobei an den Deckflächen (51, 52) jeweils eine Mehrzahl von Schruppschneidenabschnitten (2) und davon verschieden eine Mehrzahl von Schlichtschneidenabschnitten (3) ausgebildet ist,
- oder die Schneidplatten (1, 1') zweiseitig ausgebildet sind, derart dass sich die Deckflächen (51, 52) unterscheiden und an der einen Deckfläche (51) einer Schneidplatte (1, 1') ausschließlich eine Mehrzahl von Schruppschneidenabschnitten (2) und an der anderen Deckfläche (52) eine Mehrzahl von Schlichtschneidenabschnitten (3) sowie optional weitere Schruppschneidenabschnitte (2) ausgebildet sind.

5. Verfahren nach einem der Ansprüche 1 bis 4, wobei eine erste Spantiefe (ap1) der voranstehenden Schneidplatte (1) größer ist als eine zweite Spantiefe (ap2) der nachstehenden Schneidplatte (1') und die erste Spantiefe (ap1) insbesondere zwischen 0,5 mm und 8 mm beträgt.

6. Verfahren nach einem der vorangegangenen Ansprüche 1 bis 5, wobei die zweite Spantiefe (ap2) der nachstehenden Schneidplatte (1') zwischen 0,1 mm und 2 mm beträgt.

7. System aus Werkzeugaufnahme (6), insbesondere Kassette (6), für ein Schäldrehen umfassend wenigstens zwei Plattensitze (61, 62) und daran angeordnet gleiche Schneidplatten (1, 1'), an welchen jeweils eine Mehrzahl von Schruppschneidenabschnitten (2) und jeweils eine Mehrzahl von davon verschiedenen Schlichtschneidenabschnitten (3) ausgebildet ist, und die Plattensitze (61, 62) derart ausgebildet sind, dass die bezüglich einer vorgesehenen Bearbeitungsrichtung voranstehende, für eine Schruppbearbeitung vorgesehene Schneidplatte (1) so orientiert ist, dass nur ein Schruppschneidenabschnitt (2) in einer Eingriffsposition steht und dass die nachstehende, für eine Schlichtbearbeitung vorgesehene Schneidplatte (1') so orientiert ist, dass nur ein Schlichtschneidenabschnitt (3) in einer Eingriffsposition steht.

8. Schneidplatte (1, 1') für ein Schäldrehen, wobei die Schneidplatte (1, 1') entweder
- zwei gleichartige Deckflächen (51, 52) aufweist, wobei an den Deckflächen (51, 52) jeweils eine Mehrzahl an Schruppschneidenabschnitten (2) und eine Mehrzahl von davon verschiedenen Schlichtschneidenabschnitten (3) ausgebildet ist, oder
- die Schneidplatte (1, 1') zweiseitig ausgebildet ist, derart dass sich die Deckflächen (51, 52) unterscheiden und an der einen Deckfläche (51) der Schneidplatte (1, 1') ausschließlich eine Mehrzahl an Schruppschneidenabschnitten (2) und an der anderen Deckfläche (52) ausschließlich eine Mehrzahl von davon verschiedenen Schlichtschneidenabschnitten (3) ausgebildet ist,
wobei Schruppschneidenabschnitte (2) und Schlichtschneidenabschnitte (3) zumindest auf einer Seite des jeweiligen Abschnitts (2, 3) räumlich voneinander getrennt sind.

9. Schneidplatte (1, 1') nach Anspruch 8, wobei ein Schruppschneidenabschnitt (2) an einem Eckenbereich (EB) der Schneidplatte (1, 1') ausgebildet ist.

10. Schneidplatte (1, 1') nach Anspruch 8 oder 9, wobei ein Schlichtschneidenabschnitt (3) einen Nebenschneidenabschnitt (332) und einen dazu in Richtung einer Plattenmitte abgewinkelt verlaufenden Hauptschneidenabschnitt (331) umfasst.

11. Verwendung einer Schneidplatte (1, 1') nach einem der Ansprüche 8 bis 10 für ein Schäldrehen, insbesondere für ein Verfahren zum Schäldrehen nach wenigstens einem der Ansprüche 1 bis 6.
